# EUROPÄISCHE PATENTSCHRIFT

(11) **EP 0 435 395 B1**
(45) Veröffentlichungstag und Bekanntmachung des Hinweises auf die Patenterteilung: **13.03.1996**
(21) Anmeldenummer: 90203399.2
(22) Anmeldetag: 18.12.1990
(51) Int. Cl.: H04J 3/06

(54) **Hierarchisches Synchronisationsverfahren für Vermittlungsstellen eines Fernmeldenetzes**
Hierarchical synchronization method for the nodes of a telecommunication network
Méthode hiérarchique de synchronisation pour les point de commutation d'un reseau de télécommunications

(30) Priorität: 28.12.1989 DE 3943052
(43) Veröffentlichungstag der Anmeldung: 03.07.1991
(73) Patentinhaber: Philips Patentverwaltung GmbH, D-22335 Hamburg (DE); Philips Electronics N.V., NL-5621 BA Eindhoven (NL)
(72) Erfinder: Bernert, Jan-Paul, Dr., W-8500 Nürnberg (DE)
(74) Vertreter: Peuckert, Hermann, Dipl.-Ing.

(56) Entgegenhaltungen:
- US-A- 2 986 723
- IBM TECHNICAL DISCLOSURE BULLETIN Bd. 25, Nr. 11B, April 1983, ARMONK US Seiten 6293 - 6298 L. S. ROGERS 'CLOCK SOURCE SELCTION METHOD IN DISTRIBUTED communication network'

## Beschreibung

Die Erfindung bezieht sich auf ein hierachisches Synchronisationsverfahren für Vermittlungsstellen eines Fernmeldenetzes mit von Vermittlungsstelle zu Vermittlungsstelle unterschiedlich zugeordneter Synchronkennung, bei dem anhand der Synchronkennung die als Taktmaster bezeichnete Vermittlungsstelle mit der höchsten Taktpriorität ermittelt wird, bei dem von jeder Vermittlungsstelle eine Synchronisationsmeldung mit der gespeicherten Synchronkennung und weiteren Kennzeichen zur Identifikation der aussendenden Vermittlungsstelle aussendbar ist und bei dem von jeder Vermittlungsstelle die Synchronkennung mit der höchsten Taktpriorität ermittelt und außer der Synchronkennung auch alle der Synchronkennung beigefügten Kennzeichen gespeichert werden.

Bei einem Fernmeldenetz mit mobilen Vermittlungsstellen ändert sich durch die Mobilität der Vermittlungsstellen laufend die Topologie des Fernmeldenetzes. Eine Vermittlungsstelle wird Bestandteil des Fernmeldenetzes, indem sie mit mindestens einer der Vermittlungsstellen des Fernmeldenetzes verbunden wird. Des weiteren ändert sich die Topologie des Fernmeldenetzes dadurch, daß beispielsweise durch einen Ortswechsel einer Vermittlungsstelle Verbindungswege über diese Vermittlungsstelle entfallen.

Insbesondere die Synchronisation der Vermittlungsstellen untereinander, im folgenden als Netzsynchronisation bezeichnet, muß sich daher ständig der schwankenden Ausdehnung des Netzes, an das sich stark verändernde Verkehrsaufkommen und an die wechselnde Verfügbarkeit von Verbindungswegen anpassen.

Aus der DE 36 29 931 A1 ist ein hierarchisches Synchronisationsverfahren für Vermittlungsstellen eines Fernmeldenetzes bekannt, bei dem jeder Vermittlungsstelle eine von Vermittlungsstelle zu Vermittlungsstelle unterschiedliche Synchronkennung zugeordnet ist und jede Vermittlungsstelle zu allen an ihr angeschlossenen Vermittlungsstellen eine Synchronkennung sendet. In jeder Vermittlungsstelle wird anhand der empfangenen Synchronkennung die Takthierarchie ermittelt und der Takt der Vermittlungsstelle mit der höchsten Priorität zur Synchronisation herangezogen. Je nach Betriebszustand des Fernmeldenetzes wird die Synchronkennung in einer Taktmeldung, einer Master-Suchmeldung oder einer Master-Resetmeldung gesendet. In diesen Meldungen ist stets die Nummer der aussendenden Vermittlungsstelle enthalten.

Wenn eine Vermittlungsstelle eine Taktmeldung mit höherer Priorität über eine Verbindungsleitung erhält, so sendet die betreffende Vermittlungsstelle über alle anderen Verbindungsleitungen diese Taktmeldung weiter. Als Verbindungsleitung, über die die betreffende Vermittlungsstelle ihr Taktsignal bezieht, wählt die betreffende Vermittlungsstelle jene Verbindungsleitung aus, von welcher sie die Taktmeldung zuerst empfangen hat. Um auch dann einen fehlerfreien Taktbaum erstellen zu können, wenn im Fernmeldenetz mehrere Ereignisse gleichzeitig auftreten und sich die Meldungen überschneiden, wird beim Senden der Taktmeldungen eine Markierung zur Unterscheidung verschiedener Betriebszustände des Fernmeldenetzes hinzugefügt. Diese Markierungen werden entsprechend ihrer Priorität bearbeitet.

Bei Master-Suchmeldungen startet eine Steuereinrichtung beim Aussenden der Synchronkennung ein Zeitglied, dessen Verzögerungszeit so groß gewählt wird, wie die Zeitspanne, die eine Master-Suchmeldung benötigt, um das gesamte Fernmeldenetz zu durchlaufen. Empfängt die Steuereinrichtung eine andere Master-Suchmeldung während der Verzögerungszeit, so wird das Zeitglied zurückgesetzt und von der Steuereinrichtung erneut gestartet. Dadurch sollen Überschneidungen von Master-Suchmeldungen beim Aufbau eines neuen Taktbaums vermieden werden.

Bei Netzen mit einer Anzahl von vielen Vermittlungsstellen (z.B. 250 Vermittlungsstellen) ist es nicht unwahrscheinlich, daß an verschiedenen Stellen des Vermittlungsnetzes unterschiedliche Ereignisse in Bezug auf die Dauer der Synchronisation des gesamten Netzes nahezu gleichzeitig auftreten. Dadurch können sich an verschiedenen Vermittlungsstellen eintreffende Meldungen überschneiden. Hinzukommt, daß durch unterschiedliches Verkehrsaufkommen auf den einzelnen Verbindungsleitungen und der unterschiedlichen Anzahl der an einer Weiterreichung einer Meldung beteiligten Vermittlungen die Reihenfolge, in der Meldungen an einer Vermittlungsstelle ankommen, nicht immer der zeitlichen Reihenfolge, in der diese Meldungen ursprünglich generiert wurden, entspricht. Durch die unterschiedliche Verarbeitung einer Taktmeldung, einer Master-Suchmeldung und einer Master-Resetmeldung und die bei Aussendung dieser Meldungen gestarteten Zeitglieder ist es nicht auszuschließen, daß ein solches Fernmeldenetz in nicht definierte Betriebszustände gelangen könnte. Obwohl sich das bekannte Fernmeldenetz bereits in der Praxis bewährt, so wäre der theoretische Beweis für eine unter allen Betriebsumständen fehlerfreie Netzsynchronisation, wenn er überhaupt erbringbar ist, allenfalls nur mit sehr großem Aufwand zu führen. Gerade aber für sicherheitssensible Anwendungsfälle sollte nur von einer als konfliktfrei beweisbaren Netzkonzeption ausgegangen werden.

Aus der US-A-2 986 723 ist auch ein hierachisches Synchronisationsverfahren bekannt, bei dem aus Synchronkennungen der Vermittlungsstellen ein Taktmaster ermittelt wird. Es wird von den Vermittlungsstellen eine Meldung ("signature") gebildet, die den Taktmaster, die Länge des Taktpfades, die Identifikationsnummer der betreffenden Vermittlungsstelle und die benachbarte Vermittlungsstelle angibt, von der der Takt bezogen wird.

Aufgabe der vorliegenden Erfindung ist es, ein hierarchisches Synchronisationsverfahren für ein Fernmeldenetz der eingangs genannten Art zu schaffen, bei dem eine schnelle und fehlerfreie Netzsynchronisation unter allen Betriebszuständen des Fernmeldenetzes jederzeit gewährleistet werden kann.

Diese Aufgabe wird durch ein hierachisches Synchronisationsverfahren für Vermittlungsstellen eines Fernmeldenetzes der eingangs genannten Art dadurch gelöst,

daß die in einer Synchronisationsmeldung enthaltenen Kennzeichen zu einem Pfadvektor zusammengesetzt sind und
daß eine als Länge des Taktpfades bezeichnete Information über die Anzahl der zwischen dem Taktmaster und einer Vermittlungsstelle liegenden anderen Vermittlungsstellen durch Addition aller Elemente des Pfadvektors ermittelbar ist.

Auf diese Weise wird bei einer Betriebszustandsänderung einer Vermittlungsstelle nur noch eine einzige Meldung ausgesendet. Die Verwendung einer einzigen Meldung, die keine Markierung des Betriebszustands enthält, hat den Vorteil, daß bei der sequentiellen Bearbeitung ankommender Meldungen die einzelnen Meldungen gleichberechtigt abgearbeitet werden können und sich stets die bessere Meldung durchsetzt, unabhängig davon, in welcher Reihenfolge in Bezug auf andere eintreffende Meldungen sie bei einer Vermittlungsstelle eintrifft.

Ein weiterer Vorteil ist, daß die Verwendung eines Zeitgliedes überflüssig wird.

Dies spart zum einen Hardwareaufwand, zum anderen bleibt die Bearbeitung einer Meldung frei von äußeren Einflüssen (dem Zeitglied). Bei der Bearbeitung einer Meldung reduziert sich auf diese Weise auch die Anzahl der Abfragen und die Anzahl der auf die Ergebnisse dieser verschiedenen Anfragen möglichen Reaktionen. Die Unabhängigkeit von äußeren (Zeit-) Bedingungen und die Verwendung nur eines Meldungstyps reduziert entscheidend die bei einem theoretischen Beweis zu berücksichtigenden Zustände. Hierdurch ist es möglich, für dieses hierarchische Synchronisationsverfahren in mathematisch nachprüfbarer Weise, beispielsweise über die Theorie der "Finite States Machine", eine schnelle und stabile Netzsynchronisation, bei der Konflikte bei der Ermittlung der Takthierarchie unter allen Betriebszuständen ausgeschlossen sind, zu verifizieren.

Weiter wird bei der Erfindung zur Identifizierung der Vermittlungsstellen, die eine Synchronisationsmeldung ausgesandt bzw. weitergeleitet haben, ein Pfadvektor verwendet, in dem die Vermittlungsstellen an einer Stelle, die ihrer Identifikationsnummer entspricht, ein Kennzeichen setzen. Dieser Vektor ist so zu wählen, daß er für alle möglichen Ausbaugrößen des vermaschten Fernmeldenetzes eine entsprechende Anzahl von Plätzen, in denen das Kennzeichen gesetzt werden kann, bereitstellt. Dies hat den Vorteil, daß die Länge der Synchronisationsmeldung konstant ist und ab einer gewissen Größe des Vermittlungsnetzes die Länge einer solchen Synchronisationsmeldung sogar kürzer ist als bei einer Synchronisationsmeldung, bei der die Identifikationsnummer der Vermittlungsstellen ausdrücklich angegeben wird.

Bei der Auswahl der Verbindungsleitung, über die das Taktsignal von der augenblicklichen prioritätshöchsten Vermittlungsstelle (Taktmaster) bezogen wird, wird die Anzahl der im Verbindungsweg (Taktpfad) zwischen einer Vermittlungsstelle und dem Taktmaster liegenden anderen Vermittlungsstellen ermittelt. Bei mehreren existierenden Taktpfaden wird der Takt über den Taktpfad bezogen, der die geringste Anzahl dazwischenliegender Vermittlungsstellen aufweist.

Somit werden die Länge der Taktpfade im gesamten Netz minimiert. Dies bietet unter anderem den Vorteil, daß das Netz bei Änderungen des Taktmasters bzw. des Taktbaums schnellstmöglich wieder in diesen stabilen Endzustand gelangt.

Gegenüber der US-A-2 986 723 weist die Erfindung den Vorteil auf, daß der Taktpfad anhand des Pfadvektors angegeben wird und nicht nur explizit die benachbarte Vermittlungsstelle, von der der Takt bezogen wird.

In einer Ausgestaltung der Erfindung ist jede Vermittlungsstelle in Abhängigkeit bestimmter anderer Betriebszustände verschiedenen Hierarchiestufen zuordenbar. In der höchsten Hierarchiestufe entspricht die Synchronnummer der Identifikationsnummer der Vermittlungsstelle. Wird durch eine Änderung des Betriebszustands die Vermittlungsstelle in eine niedrigere Hierarchiestufe eingeordnet, so wird zu ihrer Synchronkennung eine Zahl addiert, die mindestens gleich der für die maximale Anzahl der im höchsten Ausbauzustand des Fernmeldenetzes vorgesehenen Anzahl von Vermittlungsstellen entspricht. Hierdurch ist auf einfache Weise gewährleistet, daß als Taktgeber stets Vermittlungsstellen der höchsten Hierarchiestufe und bei mehreren Vermittlungsstellen in der jeweils zur Zeit geltenden höchsten Hierarchiestufe die Vermittlungsstelle mit der kleinsten Identifikationsnummer gewählt wird. Die Implementierung der Hierarchiestufe in die Synchronkennung bietet somit den Vorteil, daß zur Übertragung und Auswertung der Hierarchiestufen kein zusätzlicher Aufwand betrieben werden muß und die Einfachheit der Synrchronisationsmeldung beibehalten werden kann.

Durch in den Ansprüchen 6 bis 17 vorgeschlagene Regeln wird die Ausbreitung der auszutauschenden Informationen auf die tatsächlich betroffenen Teilnetze beschränkt. Hierdurch ist eine effektive Netzsynchronisation mit einer geringstmöglichen Anzahl von zwischen den Vermittlungsstellen auszutauschenden Informationen sichergestellt.

Insbesondere dadurch, daß eine Vermittlungsstelle, die nicht selbst Taktmaster ist, bei Empfang einer Synchronkennung, die größer ist als ihre gespeicherte Synchronkennung, die Menge der empfangenen Kennzeichen mit der Menge der gespeicherten Kennzeichen auf Disjunktheit überprüft, ist auch die Konsistenz des Netzes gewährleistet, da auf eventuelle Inkonsistenzen enttsprechend reagiert wird. Netzkonsistenz bedeutet, daß die in jeder Vermittlungsstelle gespeicherten Daten sich aus der Sicht eines globalen Beobachters, dem alle Informationen zugänglich sind, nicht widersprechen.

Im folgenden wird die Erfindung anhand der in den Zeichnungen dargestellten Ausführungsform für verschiedene Betriebszustände des Fernmeldenetzes näher beschrieben und erläutert. Es zeigen:
- Fig. 1: ein Flußdiagramm, das die bei Anschluß einer anderen Vermittlungsstelle auszuführenden Verarbeitungsschritte graphisch darstellt.
- Fig. 2: ein Flußdiagramm, das die beim Abklemmen bzw. Ausfall einer angeschlossenen Vermittlungsstelle auszuführenden Verarbeitungsschritte graphisch dargestellt.
- Fig. 3: ein Flußdiagramm, das die bei Einstufung einer Vermittlungsstelle in eine höhere Hierachiestufe auszuführenden Verarbeitungsschritte graphisch darstellt.
- Fig. 4: ein Flußdiagramm, das die bei Einstufung einer Vermittlungsstelle in eine niedrigere Hierarchiestufe auszuführenden Verarbeitungsschritte darstellt.
- Fig. 5: ein Flußdiagramm, das die Abarbeitung einer ankommenden Sychronisationsmeldung in einer Vermittlungsstelle graphisch darstellt.
- Fig. 6: den Ablauf der Netzsynchronisation bei Inbetriebnahme von Verbindungsleitungen.
- Fig. 7: den Ablauf der Netzsynchronisation beim Übergang einer Vermittlungsstelle von einer höheren Hierarchiestufe in eine niedrigere Hierarchiestufe.
- Fig. 8: den Ablauf der Netzsynchronisation beim Übergang einer Vermittlungsstelle von einer niedrigeren Hierarchiestufe in eine höhere Hierarchiestufe.
- Fig. 9: den Ablauf der Netzsynchronisation bei Ausfall von Verbindungsleitungen.

Einer jeden Vermittlungsstelle im Ausführungsbeispiel ist eine Identifikationsnummer ID zugeordnet, welche die Vermittlungsstelle von anderen Vermittlungsstellen eindeutig unterscheidet. Diese Identifikationsnummer ID ist deshalb innerhalb eines Fernmeldenetzes insgesamt nur einmal vergeben. Bei der Vergabe der Identifikationsnummern wurde im Ausführungsbeispiel mit der Nummer 1 begonnen und fortlaufend aufsteigend numeriert. Hierdurch entspricht die größte vergebene Identifikationsnummer ID(Max) genau der Anzahl aller Vermittlungsstellen. Aus den Identifikationsnummern ID wird eine in den Synchronisationsmeldungen verwendete Synchronkennung SYNC-NR abgeleitet.

Im Ausführungsbeispiel sind die Vermittlungsstellen zwei verschiedenen Hierarchiestufen zuordenbar. In eine erste höhere Hierarchiestufe werden die Vermittlungen eingeordnet, welche ihren Takt von einer Atomuhr mit hoher Taktgenauigkeit (z.B. 10⁻¹) ableiten. In dieser ersten Hierarchiestufe entspricht die Synchronkennung SYNC-NR genau der Identifikationsnummer ID der Vermittlungsstelle (SYNC-NR = ID). In eine zweite niedrigere Hierarchiestufe werden die Vermittlungsstellen eingeordnet, welche über keine eigene Atomuhr verfügen oder deren Atomuhr defekt ist. Bei diesen Vermittlungsstellen wird die Synchronkennung SYNC-NR durch Addition der größten vergebenen Identifikationsnummer ID(Max) auf die Identifikationsnummer ID der betreffenden Vermittlungsstelle gebildet (SYNC-NR = ID + ID(Max)).

Ziel des im folgenden im einzelnen geschilderten hierarchischen Synchronistionsverfahrens ist es, daß von allen Vermittlungsstellen des vermaschten Fernmeldenetzes eine Vermittlungsstelle ausgewählt wird, von der alle anderen Vermittlungsstellen ihr Taktsignal beziehen, das heißt, ihre internen Taktgeber mit dem Taktgeber der ausgewählten Vermittlungsstelle synchronisieren. Die ausgewählte Vermittlungsstelle wird daher im folgenden als Taktmaster bezeichnet. Durch das Synchronisationsverfahren setzt sich jeweils die Vermittlungsstelle als Taktmaster durch, die in dem betreffenden vermaschten Fernmeldenetz die jeweils kleinste Synchronkennung SYNC-NR aufweist.

Im folgenden wird der Verbindungsweg, über den eine Vermittlung, meist über andere Vermittlungsstellen, ihren Takt bezieht, als Taktpfad bezeichnet. Mit Taktbaum wird die Menge aller im Netz existierenden Taktpfade bezeichnet. Die durch die Synchronkennung festgelegte Ordnung zwischen den Vermittlungsstellen wird im folgenden als Takthierarchie bezeichnet.

In jeder Vermittlungsstelle ist in bekannter Weise eine Steuereinrichtung vorgesehen, welche sowohl die eigentlichen vermittlungsspezifischen Tätigkeiten (z.B. Herstellen einer Verbindung zwischen zwei Teilnehmern, im besonderen beispielsweise die Ansteuerung eines Koppelfeldes etc.) als auch den Datenaustausch mit anderen an ihr angeschlossenen Vermittlungen (beispielsweise für einen Verbindungsaufbau zwischen zwei Teilnehmern, die an verschiedenen Vermittlungsstellen angeschlossen sind, aber eben auch für die Netzsynchronisation) vornimmt.

Im Ausführungsbeispiel ist die Steuereinrichtung einer Vermittlungsstelle so aufgebaut, daß jede von der Vermittlungsstelle angeforderte Aktion (z.B. ein Verbindungsaufbauwunsch eines an der Vermittlungsstelle angeschlossenen Teilnehmers zu einem anderen Teilnehmer) über Meldungen gesteuert wird. Diese Meldungen werden in der Reihenfolge ihres Eintreffens in eine Warteschlange, dem Befehlsstapelspeicher, eingereiht und nach dem First In-/ First Out-Prinzip (FIFO) sequentiell nacheinander abgearbeitet.

Eine Meldung, die in der Vermittlungsstelle erzeugt wird, in der sie auch von der Steuereinrichtung bearbeitet wird, wird im folgenden als interne Meldung bezeichnet. Im Gegensatz hierzu werden Meldungen, die von anderen Vermittlungen an einer Vermittlung eintreffen, als externe Meldungen bezeichnet.

Zur Netzsynchronisation werden im Ausführungsbeispiel insgesamt nur vier verschiedene im folgenden beschriebene interne Meldungen erzeugt.

Wird eine andere Vermittlungsstelle mittels eines Leitungsbündels an eine Vermittlungsstelle angeschlossen, so erhält diese Vermittlungsstelle über das Leitungsbündel das Taktsignal der anderen Vermittlung. Der Taktsignaleingang einer jeden Schnittstelle, an der ein Leitungsbündel angeschlossen wird, wird von einem Schnittstellenmodul überwacht. Jedem Schnittstellenmodul einer Vermittlungsstelle ist intern eine Modulnummer M-NR zugeordnet. Wird auf einem Taktsignaleingang, an dem bisher kein Taktsignal anlag, ein Taktsignal wahrgenommen, so erzeugt das Schnittstellenmodul eine Meldung BUP (Bündel angeschlossen), und legt diese interne Meldung BUP an der ersten freien Stelle des Befehlstapelspeichers ab. Die Meldung BUP enthält hierbei die Modulnummer M-NR des betreffenden Schnittstellenmoduls.

Wird im umgekehrten Fall der Ausfall eines von einer anderen Vermittlungsstelle kommenden Taktsignals festgestellt, weil beispielsweise die Vermittlungsstelle abgeklemmt wurde, um einen Ortswechsel vorzunehmen oder aber das Leitungsbündel beispielsweise durchtrennt ist, so erzeugt das Schnittstellenmodul eine interne Meldung BDOWN (Bündel ausgefallen). Sowohl die Meldung BUP als auch die Meldung BDOWN veranlassen die Steuereinrichung gegebenenfalls zur Aussendung einer später noch im einzelnen geschilderten Synchronisationsmeldung SYNC.

Wird eine interne Atomuhr in Betrieb genommen, so wird von einer anderen Überwachungsschaltung eine Meldung ATON (Atomuhr betriebsbereit) erzeugt. Bei Ausfall der Atomuhr oder wenn in der Initialisierungsphase festgestellt wird, daß keine Atomuhr vorhanden ist, dann erzeugt diese Überwachungsschaltung eine Meldung ADOWN (Atomuhr nicht betriebsbereit). Bei der Bearbeitung der Meldung ATON bzw. ADOWN wird zunächst die Vermittlungsstelle durch die bereits beschriebene Änderung der Synchronkennzahl in die entsprechende Hierarchiestufe eingeordnet.

Jeder der vorgenannten internen Meldungen BUP, BDOWN, ATON, ADOWN liegt, wie beschrieben, eine Änderung der Netztopologie bzw. eine Änderung der Hierarchiestufe einer Vermittlungsstelle zugrunde. Je nach Topologie des Netzes und der Hierarchiestufen der anderen im Netz vorhandenen Vermittlungsstellen kann hierdurch auch die Änderung des Taktbaums oder der Takthierarchie im Netz geboten sein. Um eine mögliche Änderung des Taktbaumes und der Takthierarchie im gesamten Netz zu erreichen, erzeugen die genannten internen Meldungen BUP, BDOWN, ATON, ADOWN unter bestimmten noch im einzelnen erläuterten Voraussetzungen eine Synchronisationsmeldung SYNC, die je nach Fall an alle oder nur bestimmte einer Vermittlungsstelle über die Schnittstellenmodule angeschlossenen Vermittlungsstellen gesandt wird.

Eine Synchronisationsmeldung SYNC setzt sich zusammen aus einer Synchronkennung SYNC-NR und einem Pfadvektor P. Die Anzahl der Elemente eines Pfadvektors entspricht der maximalen Anzahl von Vermittlungsstellen ID(Max) des Fernmeldenetzes. Jedes Element des Pfadvektors P ist entsprechend einer fortlaufenden, mit Eins beginnenden, Numerierung eindeutig der Identifikationsnummer einer Vermittlungsstelle zuordenbar. Da die einzelnen Elemente des Pfadvektors vorteilhafter Weise so ausgestaltet sind, daß sie nur zwei verschiedene Zustände annehmen müssen, benötigt jedes Element des Pfadvektors zu seiner Darstellung nur eine Binärstelle. Im Ausführungsbeispiel besteht der Pfadvektor P aus einem einzigen Datenwort, in welchem für jedes Element des Pfadvektors eine Binärstelle vorgesehen ist.

Im Ausführungsbeispiel ist der maximale Ausbau des Fernmeldenetzes wegen der übersichtlicheren Darstellung auf fünf Vermittlungsstellen V1...V5 beschränkt. Im Ausführungsbeispiel ist daher auch die Anzahl der Binärstellen des Pfadvektors auf fünf Binärstellen beschränkt, die Systemkonstante ID(Max) entspricht der Zahl fünf.

In jeder Vermittlungsstelle ist ein Synchronisationsmeldespeicher MEMO vorgesehen, in welchem eine Synchronisationsmeldung SYNC gespeichert werden kann. Die im jeweiligen Synchronisationsmeldespeicher MEMO gespeicherte Synchronisationsmeldung erhält zur Unterscheidung von empfangenen bzw. gesendeten Synchronistionsmeldungen das Bezugszeichen SYNC(MEMO). Solange eine Vermittlungsstelle noch nicht mit anderen Vermittlungsstellen über ein Leitungsbündel verbunden ist, ist in ihrem Synchronisationsspeicher MEMO die eigene Synchronkennung SYNC-NR und ein Pfadvektor, dessen Elemente alle den Binärwert Null aufweisen, gespeichert.

Durch die einzelnen noch beschriebenen Bedingungen für eine Umspeicherung empfangener Synchronisationsmeldungen in den Synchronisationsmeldespeicher SYNC(MEMO) ist sichergestellt, daß die gespeicherte Synchronkennung SYNC-NR(MEMO) stets der Synchronkennung des der jeweiligen Vermittlungsstelle bekannten Taktmasters entspricht.

Im folgenden werden die von einer Vermittlungsstelle aufgrund der einzelnen internen Meldungen BUP, BDOWN, ATON, ADOWN auszuführenden Verfahrensschritte im einzelnen erläutert, die ausgeführt werden, wenn die betreffende interne Meldung vom Befehlsstapelspeicher zur Bearbeitung übernommen wird.

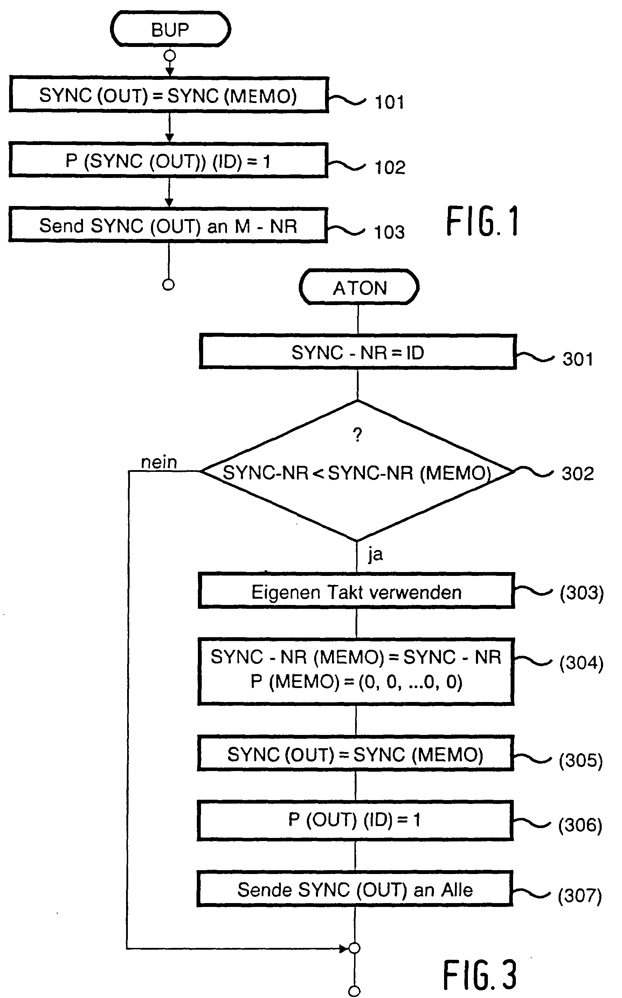

Fig. 1 zeigt ein Flußdiagramm, das die Abarbeitung einer internen Meldung BUP in einer Vermittlungsstelle darstellt. Bei einer internen Meldung BUP sendet diese Vermittlungsstelle an diejenige Vermittlungsstelle, die angeschlossen wurde, eine Synchronisationsmeldung SYNC (Block 103). Die Synchronisationsmeldung SYNC enthält die im Synchronisationsmeldespeicher MEMO enthaltene Synchronisationsmeldung SYNC(MEMO) (Block 101), wobei das Element des Pfadvektors, das der Identifikationsnummer der betreffenden Vermittlungsstelle entspricht, gekennzeichnet wird, d.h., den Binärwert Eins zugewiesen bekommt (Block 102). Damit ist die Bearbeitung der internen Meldung BUP bereits abgeschlossen und die Vermittlungsstelle fährt mit der Bearbeitung der nächsten auf dem Befehlsstapelspeicher liegenden Meldung fort. In bekannter Weise werden die auf diese Weise erzeugten Synchronmeldungen wie andere auszusendende Meldungen der Vermittlungsstelle (z.B. zum Verbindungsaufbau mit einem Teilnehmer, der nicht an dieser Vermittlungsstelle angeschlossen ist) an die neu angeschlossene Vermittlungsstelle ausgesandt.

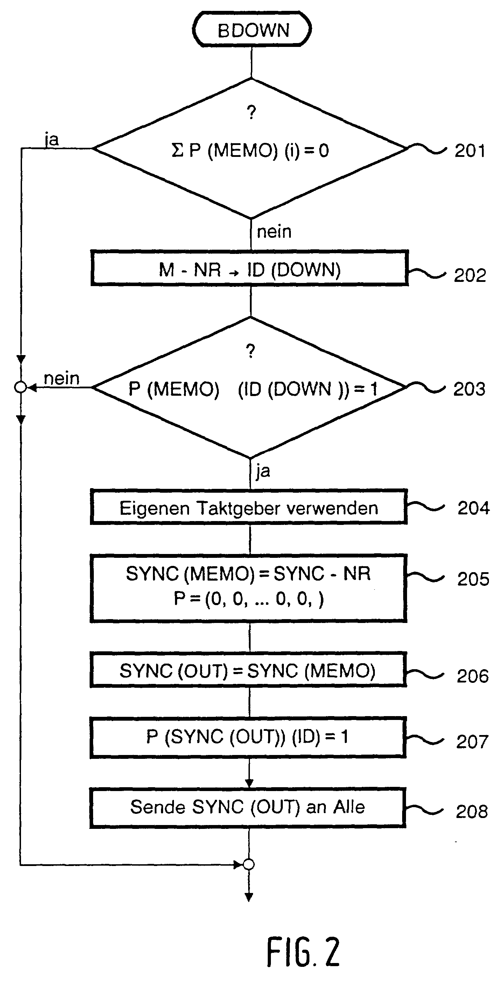

Fig. 2 zeigt ein Flußdiagramm für die Bearbeitung einer internen Meldung BDOWN. Als erstes wird überprüft, ob die Vermittlungsstelle selbst Taktmaster ist. Hierzu kann sie beispielsweise die Anzahl aller gesetzten Kennzeichen in ihrem gespeicherten Pfadvektor P(MEMO) addieren. Ist die Summe aller gekennzeichneten Elemente des Pfadvektors gleich Null, so ist dies das Zeichen dafür, daß die Vermittlungsstelle selbst Taktmaster ist (Abfrageblock 201). Ist die betreffende Vermittlungsstelle Taktmaster, so erfolgt keine weitere Reaktion.

Anstelle dieser etwas rechenzeitintensiven Bestimmung der Taktmastereigenschaft einer Vermittlungsstelle kann die Taktmastereigenschaft auch durch Abfrage einer eigens dafür vorgesehenen Zustandsvariablen vorgesehen werden. Die in dieser Variablen enthaltene Information ist redundant zu dem gespeicherten Taktvektor. Immer wenn die Vermittlungsstelle ihre Taktmastereigenschaft ändert, muß auch dann entsprechend der Inhalt dieser Zustandsvariablen angepaßt werden.

Immer dann, wenn eine Vermittlungsstelle nicht Taktmaster ist, so ist mindestens ein Element des im Synchronisationsmeldespeichers MEMO gespeicherten Pfadvektors P(MEMO) ungleich Null oder die Zustandsvariable entsprechend gesetzt. In diesem Fall vergleicht die Vermittlungsstelle, ob sie ihren Takt von dem Taktbündel bezogen hat, welches als ausgefallen gemeldet wurde. Die interne Meldung BDOWN enthält jeweils die Nummer M-NR des die BDWON-Meldung auslösenden Schnittstellenmoduls. Anhand einer in jeder Vermittlungsstelle vorgesehenen Tabelle, in welcher den Schnittstellenmodulnummern jeweils die Identifikationsnummern der daran angeschlossenen Vermittlungsstellen zugeordnet sind, erhält die betreffende Vermittlungsstelle die Identifikationsnummer ID(DOWN) der Vermittlungsstelle, zu der nunmehr keine Verbindung mehr besteht (Block 202). In einer weiteren Abfrage (Abfrageblock 203) überprüft die Vermittlungsstelle, ob dasjenige Element des gespeicherten Pfadvektors P(MEMO), das der Identifikationsnummer ID(DOWN) der ausgefallenen Vermittlungsstelle entspricht, gekennzeichnet ist. Ist dies nicht der Fall, so wird der Takt nicht über diese Vermittlung bezogen und die Bearbeitung der BDOWN-Meldung ist damit abgeschlossen.

Wird durch den Vergleich jedoch festgestellt, daß über die ausgefallene Vermittlung ein Takt bezogen wurde, so schaltet die Vermittlungsstelle zunächst auf den eigenen Taktgeber um (Block 204). Diese Vermittlungsstelle wird dadurch zumindest für sich selbst vorübergehend zum Taktmaster. Als nächstes wird daher im Synchronisationsmeldespeicher MEMO die eigene SYNC-Nummer und als Pfadvektor P ein aus lauter ungekennzeichneten Elementen bestehender Pfadvektor gespeichert (Block 205). Diese gespeicherte Synchronisationsmeldung SYNC(MEMO) wird als neue auszusendende SYNC-Meldung SYNC(OUT) herangezogen (Block 206), wobei das Element des Pfadvektors, das der eigenen Identifikationsnummer entspricht, gekennzeichnet wird (Block 207). Anschließend wird die auf diese Weise gebildete Synchronisationsmeldung an alle anderen Vermittlungsstellen ausgesendet (Block 208). Ob sich diese Vermittlungsstelle durch diese Synchronisationsmeldung im gesamten Netz als Taktmaster durchsetzen wird, hängt von der neuen Netztopologie und der Synchronkennung dieser Vermittlungsstelle ab.

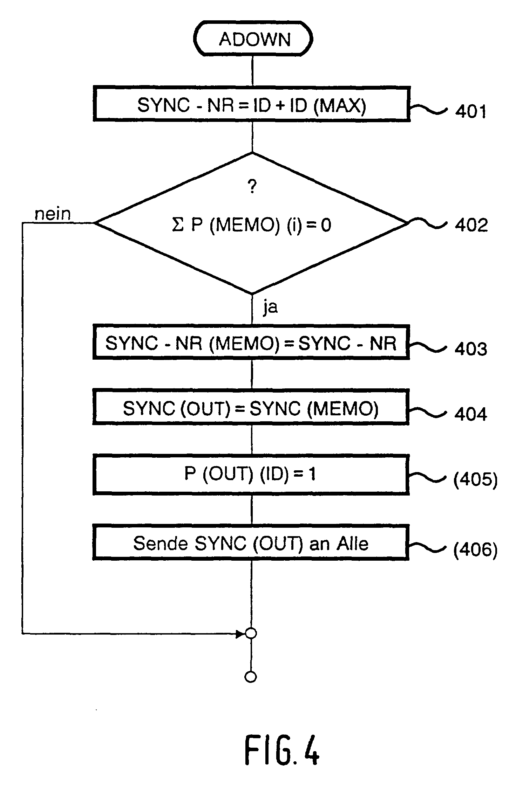

Anhand eines in Fig. 3 dargestellten Flußdiagramms werden nun die Verfahrensschritte erläutert, die bei der Abarbeitung einer internen Meldung ATON ausgeführt werden. Als erstes weist die Vermittlungsstelle ihrer Synchronkennung SYNC-NR die eigene Identifikationsnummer ID zu (Block 301). Daraufhin stellt sie fest, ob durch den Aufstieg in eine höhere Hierarchieklasse ihre Priorität nunmehr größer geworden ist als die Priorität des Taktmasters. Hierzu vergleicht sie ihre neu gebildete Synchronkennung SYNC-NR mit der im Synchronisationsmeldespeicher MEMO gespeicherten Synchronkennung SYNC-NR(MEMO) (Abfrageblock 302). Ist ihre Synchronkennung SYNC-NR größer als die gespeicherte Synchronkennung SYNC-NR(MEMO) (= Synchronkennung SYNC-NR des Taktmasters), so ist an dieser Stelle bereits die Bearbeitung der Befehle abgeschlossen. Im anderen Fall, wenn die eigene Synchronkennung SYNC-NR kleiner ist als die gespeicherte Synchronkennung SYNC-NR(MEMO), übernimmt die Vermittlungsstelle die Position des neuen Taktmasters. Hierzu verwendet sie zunächst ihren eigenen Takt (Block 303). Dann korrigiert sie die in ihrem Synchronisationsmeldespeicher MEMO gespeicherte Synchronisationsmeldung SYNC-NR(MEMO), indem sie als Synchronkennung ihre eigene Synchronkennung und alle Elemente des gespeicherten Pfadvektors P(MEMO) auf Null setzt (Block 304). Die auf diese Weise veränderte gespeicherte Synchronmeldung SYNC(MEMO) wird zur Aussendung in eine auszusendende Synchronisationsmeldung SYNC(OUT) vorbereitet (Block 305). Hierzu wird das Element des Pfadvektors P(OUT) der auszusendenden Synchronisationsmeldung, das der eigenen Identifikationsnummer entspricht, gekennzeichnet (Block 306) und die auf diese Weise gebildete auszusende Synchronisationsmeldung SYNC(OUT) ausgesendet (Block 307).

Fig. 4 zeigt in einem Flußdiagramm die von einer Vermittlungsstelle durchgeführten Bearbeitungsschritte bei Abarbeitung einer internen Meldung ADOWN. Der Abstieg in eine niedrigere Hierarchieklasse geht einher mit der Erhöhung der Synchronkennung SYNC-NR um die maximale Anzahl ID(Max) der im Vermittlungsnetz vorgesehenen Vermittlungsstellen. Im Ausführungsbeispiel, bei dem nur zwei Hierarchiestufen verwendet werden, berechnet sich die Synchronkennung SYNC-NR bei einer Vermittlungsstelle, deren Atomuhr ausgefallen ist, aus der Summe der Identifikationskennung ID und der Systemkonstanten ID(Max) (Block 401). Als nächstes stellt die Vermittlungsstelle fest, ob sie bisher selbst Taktmaster war (Abfrageblock 402). War die Vermittlungsstelle selbst nicht Taktmaster, so ist durch den Wechsel in eine andere Hierarchiestufe die Takthierarchie des Netzes nicht betroffen und die Bearbeitung der internen Meldung ADOWN endet. War die betroffene Vermittlungsstelle jedoch bisher Taktmaster, so paßt sie zunächst die im Synchronisationsmeldespeicher MEMO gespeicherte Synchronkennung SYNC(MEMO) an ihre neue Synchronkennung SYNC-NR an (Block 403). Die auf diese Weise neu gebildete gespeicherte Synchronisationsmeldung SYNC(MEMO) wird zur Aussendung vorbereitet (Block 404). Hierzu wird dasjenige Element des Pfadvektors der auszusendenden Synchronisationsmeldung, das der Identifikationsnummer ID der Vermittlung entspricht, gekennzeichnet (Block 405) und diese geänderte Synchronisationsmeldung an alle an dieser Vermittlungsstelle angeschlossenen Vermittlungsstellen ausgesendet (Block 406). Hiermit ist die Bearbeitung der internen Meldung ADOWN abgeschlossen.

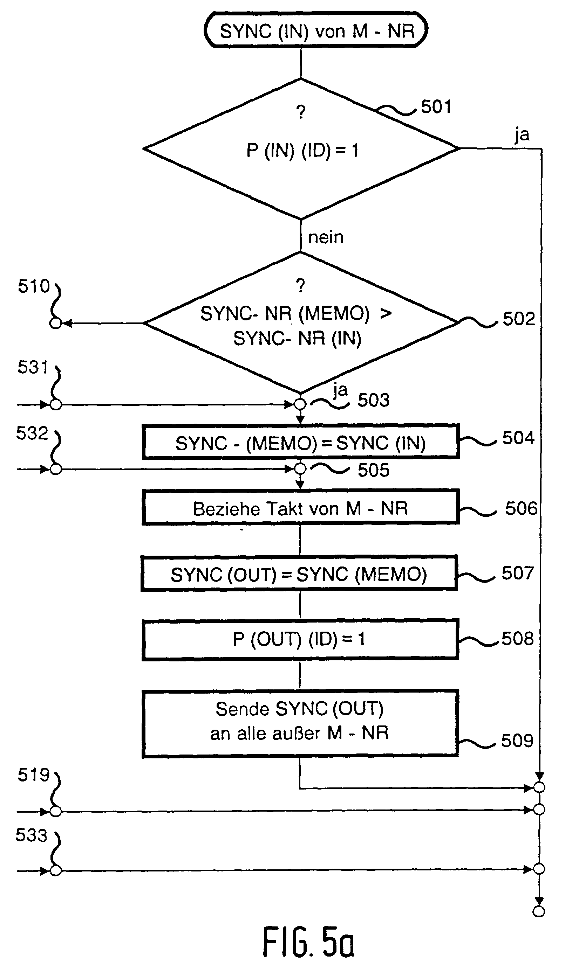

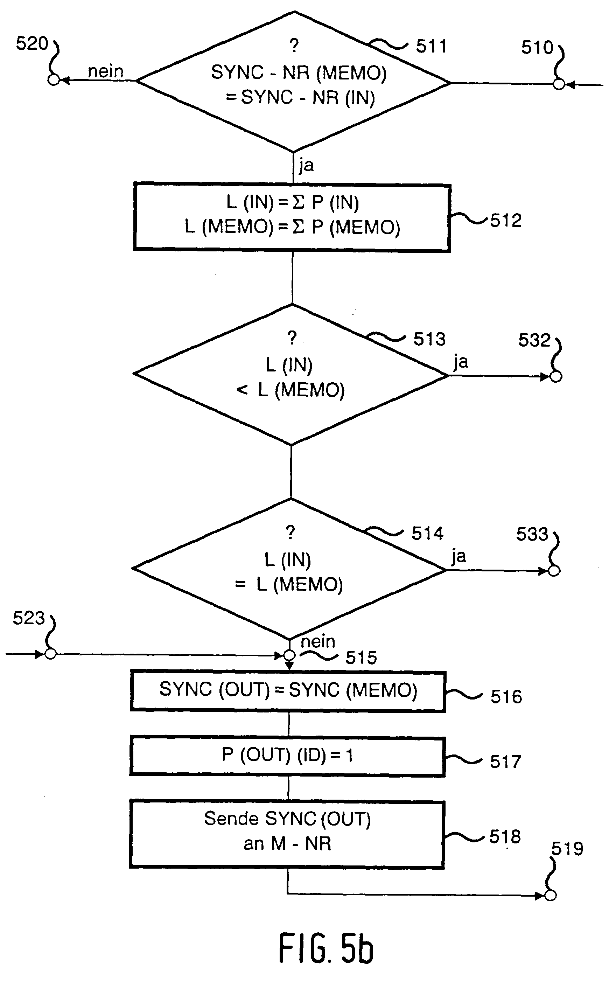

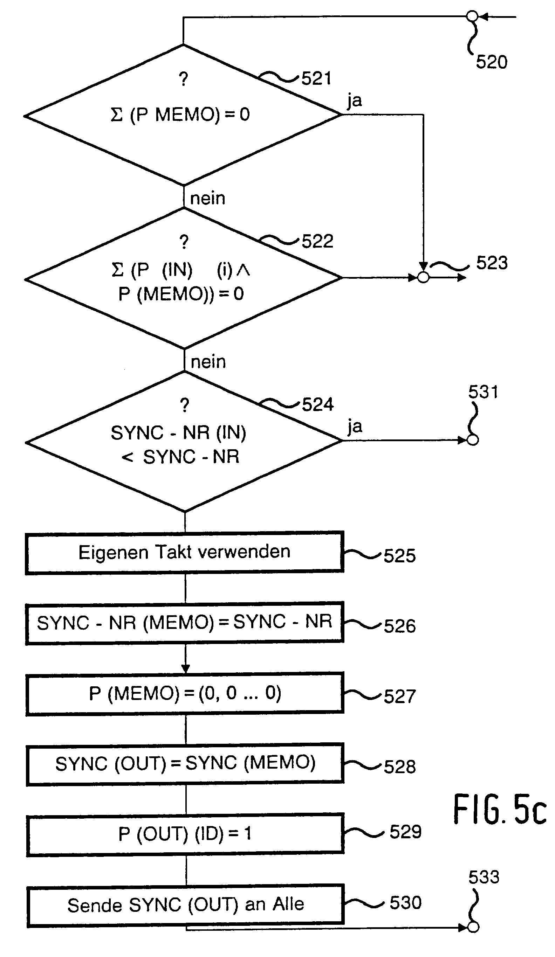

Eine über ein Leitungsbündel ankommende externe Meldung wird wie eine interne Meldung an letzter Stelle des Befehlsstapelspeichers abgelegt. Handelt es sich hierbei um eine von der am anderen Ende des Leitungsbündels angeschlossenen Vermittlung ausgesandte Synchronisationsmeldung, so wird aus dieser empfangenen Synchronisationsmeldung eine interne Meldung SYNC(IN) erzeugt, welcher die Nummer M-NR des Schnittstellenmoduls beigefügt wird, über welches diese Synchronisationsmeldung empfangen wurde. Die bei der Bearbeitung einer Synchronisationsmeldung SYNC(IN) durch die Steuereinrichtung auszuführenden Befehlsschritte sind in Fig. 5 in Form eines Flußdiagramms wiedergegeben.

Als erstes untersucht die Steuereinrichtung Abfrageblock 501) (Fig. 5a) den Pfadvektor P(IN) der empfangenen Synchronisationsmeldung SYNC(IN). Ist das Element dieses Pfadvektors P(IN), das der eigenen Vermittlungsstelle zugeordnet ist, bereits gekennzeichnet, so wurde die Meldung bereits von der Vermittlungsstelle selbst gesendet bzw. weitergereicht und kam nun auf einem Umweg zu dieser Vermittlungsstelle zurück. Eine solche Meldung wird daher ignoriert und mit der Bearbeitung der nächsten Meldung fortgefahren.

Ist im empfangenen Pfadvektor P(IN) das der Identifikationsnummer der Vermittlungsstelle zugeordnete Element nicht gekennzeichnet, so vergleicht die Steuereinrichtung als nächstes die empfangene Synchronkennung SYNC-NR(IN) mit der in ihrem Synchronmeldespeicher MEMO gespeicherten Synchronkennung SYNC-NR(MEMO) (Abfrageblock 502). Ist die im Synchronisationsmeldespeicher gespeicherte Synchronkennung SYNC-NR(MEMO) größer als die in der Synchronisationsmeldung SYNC(IN) enthaltene Synchronkennung SYNC-NR(IN), so ist dies ein Anzeichen dafür, daß sich der Taktmaster bzw. die Hierarchiestufe des Taktmasters geändert hat. Zunächst wird daher die empfangene Synchronisationsmeldung SYNC(IN) im Synchronisationsmeldespeicher MEMO als neue Synchronisationsmeldung SYNC(MEMO) gespeichert (Block 504). Durch die Änderung des Taktmasters hat sich auch der Taktpfad bzw. der Taktbaum im Fernmeldenetz geändert, so daß der neue Takt nunmehr von der Vermittlungsstelle bezogen wird, von der die empfangene Synchronisationsmeldung ausgesandt wurde. Da in der Synchronisationsmeldung SYNC(IN) bereits die Modulnummer M-NR des Schnittstellenmoduls enthalten ist, über welches die Synchronisationsmeldung SYNC(IN) empfangen wurde, ist hierzu lediglich der interne Taktgeber der Vermittlungsstelle mit der Taktleitung dieses Schnittstellenmoduls mit der Modulnummer M-NR zu verbinden (Block 506).

Daraufhin wird die Aussendung einer Synchronisationsmeldung vorbereitet, indem die auszusendende Synchronisationsmeldung SYNC(OUT) aus der gespeicherten Synchronisationsmeldung SYNC(MEMO) gebildet wird (Block 507) und in dem Pfadvektor P(OUT) der auszusendenden Synchronisationsmeldung SYNC(OUT) das Element, das der Identifikationsnummer ID der aussendenden Vermittlungsstelle entspricht, gekennzeichnet wird (Block 508). Da die Vermittlungsstelle, von der die Synchronisationsmeldung SYNC(IN) erhalten wurde, bereits in den Taktbaum eingebunden ist, wird die Synchronisationsmeldung SYNC(OUT) an alle anderen angeschlossenen Vermittlungsstellen außer an die Vermittlungsstelle, von der die Synchronisationsmeldung erhalten wurde, ausgesandt (Block 509). Dies schließt zwar nicht aus, daß dadurch auch solche Vermittlungsstellen, die bereits über einen anderen Taktpfad mit dem neuen Taktmaster verbunden sind, eine solche Meldung erhalten, auf der anderen Seite wird durch dieses Verfahren jede Vermittlungsstelle des Fernmeldenetzes erreicht, ohne daß die aussendende Vermittlungsstelle ein Abbild des Gesamtnetzes benötigt.

Wird bei dem Vergleich (Abfrageblock 502) der gespeicherten Synchronisationsmeldung SYNC(MEMO) mit der empfangenen Synchronisationsmeldung SYNC(IN) jedoch festgestellt, daß die gespeicherte Synchronkennung SYNC-NR(MEMO) nicht größer ist als die der empfangenen Sychronkennung SYNC-NR(IN), so wird über den Konnektor 510 zu in einem weiteren Abfrageblock 511 (Fig. 5b) verzweigt und dort abgefragt, ob die gespeicherte Synchronkennung SYNC-NR(MEMO) gleich der empfangenen Synchronkennung SYNC-NR(IN) ist. Ist dies der Fall, so bezieht die Vermittlungsstelle bereits ihren Takt von dem gleichen Taktmaster, der ihr auch von der empfangenen Synchronmeldung angeboten wird.

Als nächstes wird die Länge der Taktpfade bestimmt, d.h. die Anzahl der Vermittlungsstellen, die in den Taktpfaden liegen. Da jeweils jede Vermittlungsstelle, die eine Synchronmeldung weiterleitet, das ihrer Identifikationsnummer entsprechende Element des Pfadvektors kennzeichnet, d.h., diesem Element den Binärwert Eins zuweist und alle entsprechenden Elemente des Pfadvektors, deren Vermittlungsstellen nicht an der Weiterleitung der Synchronisationsmeldung beteiligt waren den Binärwert Null beibehalten, kann durch Addition aller Elemente eines Pfadvektors auf einfache Weise die Anzahl der an der Taktweiterreichung beteiligten Vermittlungsstellen ermittelt werden. Natürlich kann auch die Länge der Taktpfade in eigenen Variablen festgehalten werden. Dies ist aber, wie gezeigt, nicht unbedingt erforderlich.

Die Länge des Taktpfades L wird sowohl für den Taktpfad der empfangenen Synchronisationsmeldung als auch für den Taktpfad der gespeicherten Synchronisationsmeldung berechnet (Block 512) und beide miteinander verglichen (Abfrageblock 513). Ist die Länge des in der empfangenen Synchronisationsmeldung SYNC(IN) enthaltenen Taktpfades L(IN) kleiner als die Länge des gespeicherten Taktpfades L(MEMO), so ist der von der empfangenen Synchronisationsmeldung SYNC(IN) angebotene Taktpfad kürzer als der Taktpfad, über den die Vermittlungsstelle den aktuellen Takt bezieht. In diesem Fall wird vom Abfrageblock 513 über den Konnektor 532 auf den Konnektor 505 (Fig. 5a) verzweigt und zunächst der Takt über diesen kürzeren Taktpfad bezogen (Block 506). Um nun auch allen anderen angeschlossenen Vermittlungsstellen gegebenenfalls Gelegenheit zum Umschalten auf diesen neuen kürzeren Taktpfad zu geben, wird an alle angeschlossenen Vermittlungsstellen, außer der Vermittlungsstelle, von der die Synchronisationsmeldung empfangen wurde, eine Synchronisationsmeldung ausgesandt, wobei, wie bereits beschrieben, im ausgesandten Pfadvektor P(OUT) das Kennzeichen, das der eigenen Identifikationsnummer ID entspricht, gesetzt wird (Blöcke 505 bis 509).

War die im Abfrageblock 513 (Fig. 5b) ermittelte Länge L(IN) des Taktpfades der empfangenen Synchronisationsmeldung SYNC(IN) nicht kleiner als die Länge des gespeicherten Taktpfades L(MEMO), so wird in einem weiteren Abfrageblock 514 verglichen, ob die beiden Pfadlängen gleich sind. Bei gleichen Pfadlängen ist es gleichgültig, auf welchem Taktpfad der Takt vom Taktmaster bezogen wird. Im Ausführungsbeispiel wird der ursprüngliche, d.h. im Synchronistionsmeldespeicher MEMO, abgespeicherte Taktpfad beibehalten, da hierdurch keine Umspeicherungen von Variablen bzw. Aussendung von Synchronisationsmeldungen notwendig werden und die Bearbeitung der Synchronisationsmeldung an dieser Stelle beendet werden kann (Verzweigung von Abfrageblock 514 über Konnektor 533, Fig. 5a und 5b zu Bearbeitungsende in Fig. 5a).

Sind die beiden Taktpfade nicht gleichlang, so bleibt als letzte Möglichkeit, daß der Taktpfad P(IN) der empfangenen Synchronisationsmeldung SYNC(IN) länger ist als der gespeicherte Taktpfad P(MEMO). Auch in diesem Fall behält die Vermittlungsstelle ihren gespeicherten Taktpfad bei. Da die Vermittlungsstelle, die die gerade bearbeitete Synchronisationsmeldung SYNC(IN) ausgesandt hatte, ihrerseits ihren Takt über einen längeren Taktpfad empfängt als die die empfangene Synchronisationsmeldung bearbeitende Vermittlungsstelle, so sendet die die empfangene Synchronisationsmeldung bearbeitende Vermittlungsstelle an die Vermittlungsstelle, von der sie diese Synchronisationsmeldung empfangen hatte, eine Synchronisationsmeldung mit ihrer eigenen gespeicherten Synchronisationsmeldung (Block 516), wobei sie wiederum im ausgesandten Pfadvektor das ihrer Identifikationsnummer entsprechende Kennzeichen setzt (Block 517). Durch diese ausgesandte Synchronisationsmeldung (Block 518) wird die andere Vermittlungsstelle gegebenenfalls in die Lage versetzt, ihren Takt über einen kürzeren Taktpfad zu beziehen. Damit endet nun auch die Bearbeitung dieser Synchronisationsmeldung (Verzweigung über Konnektor 519 zu Bearbeitungsende in Fig. 5a).

Diese Synchronisationsmeldung ist jedoch nur dann erforderlich, wenn sich die beiden Taktpfadlängen um mehr als eine Einheit voneinander unterscheiden. Durch das Beifügen des Kennzeichens beim Aussenden der Synchronisationsmeldung sind dann nämlich in der anderen Vermittlungsstelle die Länge des in der empfangenen Synchronisationsmeldung enthaltenen Taktpfades und die Länge des Taktpfades der dort gespeicherten Synchronisationsmeldung sonst gleich lang und führen wegen der gleichen Synchronkennungen zu keiner Reaktion. Durch einen zusätzlichen, nicht dargestellten, Abfrageblock kann die Aussendung einer solchen Synchronisationsmeldung vermieden werden.

Wurde beim Vergleich im Abfrageblock 511 hingegen festgestellt, daß die gespeicherte Synchronkennung SYNC-NR(MEMO) nicht gleich der empfangenen Synchronkennung SYNC-NR(IN) ist, so steht wegen der im Abfrageblock 502 vorangegangenen Abfrage somit fest, daß die gespeicherte Synchronkennung SYNC-NR(MEMO) kleiner ist als die empfangene Synchronkennung SYNC-NR(IN). Bei der Bearbeitung wird über die Konnektoren 520 zum nächsten Abfrageblock 521 (Fig. 5c) verzweigt. Die Vermittlungsstelle stellt nun als erstes fest, ob sie selbst Taktmaster ist.

Ist die Vermittlungsstelle selber Taktmaster, so sendet sie an die Vermittlungsstelle, von der sie die Synchronistionsmeldung erhalten hat, ihre eigene gespeicherte Synchronisationsmeldung, unter Hinzufügung ihres Kennzeichens (Verzweigung von Abfrageblock 521 über Konnektoren 523, 515 zu den Blöcken 516, 517, 518). Damit ist die Bearbeitung der empfangenen Synchronisationsmeldung wieder abgeschlossen.

Ist die die Synchronisationsmeldung bearbeitende Vermittlungsstelle nicht der Taktmaster, so wird in einem weiteren Abfrageblock 522 überprüft, ob der Pfadvektor der empfangenen Synchronisationsmeldung und der Pfadvektor der gespeicherten Synchronisationsmeldung disjunkt sind. Bei der Verwendung von binären Pfadvektoren kann dies dadurch festgestellt werden, daß die beiden Pfadvektoren mittels einer Und-Verknüpfung zusammengefaßt werden und die Summe des Ergebnisses dieser Und-Verknüpfung gebildet wird. Ist die Summe dieser Und-Verknüpfung gleich Null, so sind die beiden Pfadvektoren disjunkt.

Sind die beiden Pfadvektoren disjunkt, so haben der Taktpfad der empfangenen Synchronisationsmeldung SYNC(IN) und der Taktpfad der gespeicherten Synchronisationsmeldung SYNC(MEMO) zwei verschiedene Vermittlungsstellen als Taktmaster, wobei der Taktmaster, den sich die Vermittlungsstelle ausgesucht hat, von der die Synchronisationsmeldung empfangen wurde, eine niedrigere Taktpriorität aufweist als der Taktmaster, von dem die die Synchronisationsmeldung bearbeitende Vermittlungsstelle ihren Takt bezieht. In diesem Fall wird daher der Vermittlungsstelle, von der die Synchronisationsmeldung empfangen wurde, die eigene Synchronisationsmeldung gesendet, um diese Vermittlungsstelle zum Umschalten auf den besseren Taktmaster zu bewegen (vom Abfrageblock 522 über die Konnektoren 523, 515 und die Blöcke 516, 517, 518). Damit endet wiederum die Bearbeitung dieser Synchronisationsmeldung.

Sind die beiden Taktpfade nicht disjunkt, so wird in einer weiteren Abfrage 524 die empfangene Synchronisationskennung SYNC-NR(IN) mit der eigenen Synchronisationskennung SYNC-NR verglichen. Ist die empfangene Synchronkennung SYNC-NR(IN) kleiner als die eigene Synchronkennung SYNC-NR, so wird die empfangene Synchronisationsmeldung SYNC(IN) im Synchronisationsmeldespeicher MEMO gespeichert (Verzweigung von Abfrageblock 524 über Konnektoren 531, 503 zu Block 504), der Takt, von dem der empfangenen Synchronisationsmeldung SYNC(IN) beigefügten Modulnummer M-NR entsprechenden Schnittstellenmodul bezogen (Block 506) und die empfangene Synchronisationsmeldung unter Hinzufügung des eigenen Kennzeichens an alle anderen angeschlossenen Vermittlungsstellen weitergereicht (Blöcke 507 bis 509), womit die Bearbeitung der Synchronisationsmeldung beendet ist.

Ist die empfangene Synchronkennung SYNC-NR(IN) jedoch nicht kleiner als die eigene Synchronkennung SYNC-NR, so ist dies das Zeichen dafür, daß die die Synchronisationsmeldung bearbeitende Vermittlung unter allen Vermittlungsstellen, die diese Synchronisationsmeldung weitergereicht hatten, die Vermittlungsstelle mit der höchsten Taktpriorität ist und dadurch zum neuen Taktmaster geworden ist. Nunmehr verwendet diese Vermittlungsstelle ihren eigenen Taktgeber (Block 525) und speichert in ihrem Synchronisationsmeldespeicher MEMO ihre eigene Synchronkennung SYNC-NR als Synchronkennung SYNC-NR(MEMO) (Block 526). Alle Elemente des im Synchronisationsmeldespeicher MEMO gespeicherten Pfadvektors P(MEMO) werden zurückgesetzt bzw. auf Null gesetzt (Block 527). Die auf diese Weise im Synchronisationsmeldespeicher neu gebildete Synchronisationsmeldung wird zur Aussendung vorbereitet (Block 528) und das Element des Pfadvektors P(OUT), das der Identifikationsnummer ID der Vermittlungsstelle entspricht, gekennzeichnet (Block 529). Die auf diese Weise gebildete Synchronisationsmeldung wird an alle angeschlossenen Vermittlungsstellen, auch an die Vermittlungsstelle, von der die empfangene Synchronisationsmeldung empfangen wurde, ausgesandt (Block 530). Damit ist nun auch die Verarbeitung dieses Befehls beendet.

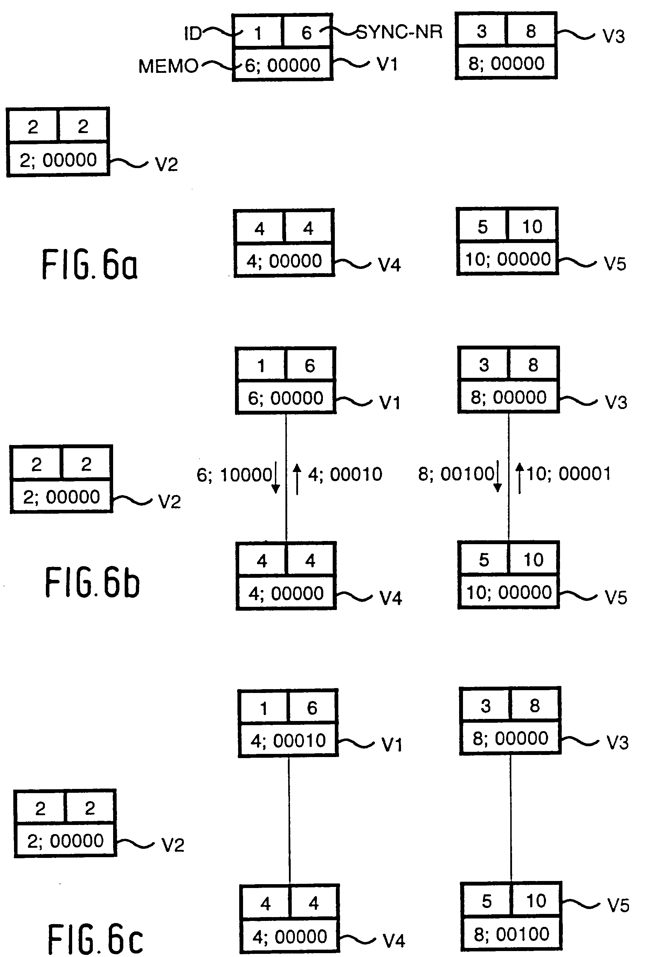

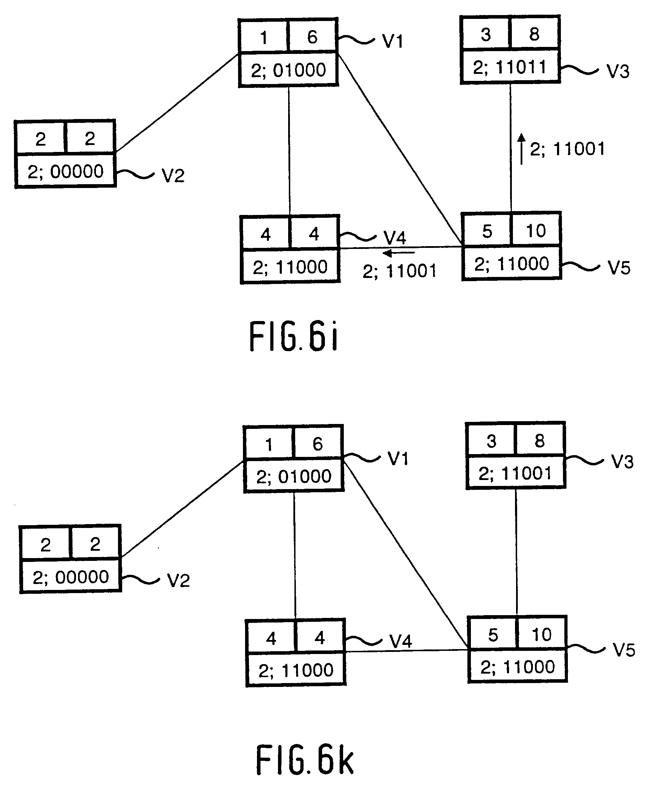

In den Figuren 6a bis 6k ist der stufenweise Aufbau einer hierarchischen Netzsynchronisation zwischen fünf Vermittlungsstellen V1...V5 beschrieben. Die Vermittlungsstellen sind symbolisch als Kästchen ausgeführt, die in ihrer oberen linken Ecke die Identifikationsnummer ID der Vermittlung und in ihrer oberen rechten Ecke die Synchronkennung SYNC-NR enthalten und in ihrer unteren Hälfte den Inhalt des Synchronisationsmeldespeichers MEMO wiedergeben.

In Fig. 6a ist ein Zustand des Fernmeldenetzes dargestellt, bei dem noch keine der Vermittlungsstellen mit einer anderen Vermittlungsstelle verbunden ist, das Fernmeldenetz also gerade erst aufgebaut wird. In diesem Fall werden die Vermittlungsstellen als Inseln betrieben und arbeiten mit ihrem eigenen internen Taktgeber.

Die Vermittlungsstellen V2 und V4 leiten ihren Takt von einer Atomuhr ab, so daß ihren Synchronkennungen jeweils die eigene Identifikationsnummer (2 bei V2 und 4 bei V4) zugeordnet ist. Die Vermittlungsstellen V1, V3, V5 leiten ihren Takt nicht von einer Atomuhr ab, so daß sie in die niedrigere Hierarchiestufe eingeordnet sind, und ihren Synchronkennungen die um 5 vermehrte Indentifikationsnummer zugeordnet ist (6 bei V1, 8 bei V3 und 5 bei V10).

Fig. 6b zeigt die nächste Aufbaustufe des Netzes, bei der die Vermittlungsstelle V1 mit der Vermittlungsstelle V4 und die Vermittlungsstelle V3 mit der Vermittlungsstelle V5 verbunden wird. Bei Anschluß einer anderen Vermittlungsstelle wird in jeder Vermittlungsstelle durch das ankommende Taktsignal, wie bereits beschrieben, eine interne Meldung BUP erzeugt. Sobald die Meldungen BUP von den betreffenden Vermittlungsstellen abgearbeitet werden, erzeugen die Vermittlungsstellen Synchronisationsmeldungen, welche sie an die neu hinzugekommenen Vermittlungsstellen senden. Da in diesem Fall die jeweiligen Vermittlungsstellen jede für sich Taktmaster waren, enthält eine Synchronisationsmeldung die Synchronkennung der eigenen Vermittlung und den Pfadvektor, dessen Elemente allesamt den Binärwert Null aufweisen, bis auf dasjenige Element des Vektors, das der Identifikationsnummer ID der eigenen Vermittlung entspricht. So erzeugt beispielsweise in Fig. 6b die Vermittlungsstelle V1 eine Synchronisationsmeldung (6;10000) mit der Synchronkennung 6 und einen Vektor von fünf Binärwerten, dessen erster Binärwert einer binären Eins und deren andere Binärwerte einer binären Null entsprechen. Die Vermittlungsstelle V4 schickt ihrerseits an die Vermittlungsstelle V1 eine Synchronisationsmeldung (4;00010), die aus der Synchronkennung 4 und einem Pfadvektor, dessen viertes Element eine binäre Eins enthält und dessen andere Elemente eine binäre Null enthalten.

Fig. 6c zeigt die Reaktionen der Vermittlungsstellen auf die von der jeweils anderen Vermittlungsstelle empfangene Synchronisationsmeldung. Die von der Vermittlungsstelle V4 von der Vermittlungsstelle V1 empfangene Synchronisationsmeldung führt bei der Abarbeitung in der Vermittlungsstelle V4 zu einer erneuten Aussendung der eigenen Synchronisationsmeldung (nicht dargestellt in den Figuren, da diese doppelt hintereinander ausgesandte Synchronisationsmeldung keine weitere Auswirkung hat), da die eigene Synchronkennung SYNC-NR (= 4) kleiner ist als die in der empfangenen Synchronisationsmeldung SYNC(IN) enthaltene Synchronkennung SYNC-NR(IN) (= 6) (bei der Abarbeitung der empfangenen Synchronisationsmeldung SYNC(IN) werden in dieser Reihenfolge die Blöcke 501, 502, 510, 511, 520, 521, 523, 515, 516, 517, 518, 519 durchlaufen). Diese Synchronisationsmeldung führt jedoch nicht zu einer Änderung der gespeicherten Informationen.

Die von der Vermittlungsstelle V1 von der Vermittlungsstelle V4 empfangene Synchronisationsmeldung (4;00010) hingegen veranlaßt die Vermittlungsstelle V1 ihren Takt von der Vermittlungsstelle V4 zu beziehen, und in ihrem Synchronisationsmeldespeicher MEMO die empfangene Synchronisationsmeldung abzuspeichern (Blöcke 501, 502, 503, 504, 505, 506). Die Aussendung einer Synchronisationsmeldung wird vorbereitet (Blöcke 507, 508) aber nicht ausgeführt, weil die einzige an der Vermittlungsstelle V1 angeschlossene Vermittlungsstelle die Vermittlungsstelle V4 ist, von der die Synchronisationsmeldung erhalten wurde.

Gleiches gilt entsprechend für die Vermittlungsstellen V3 und V5.

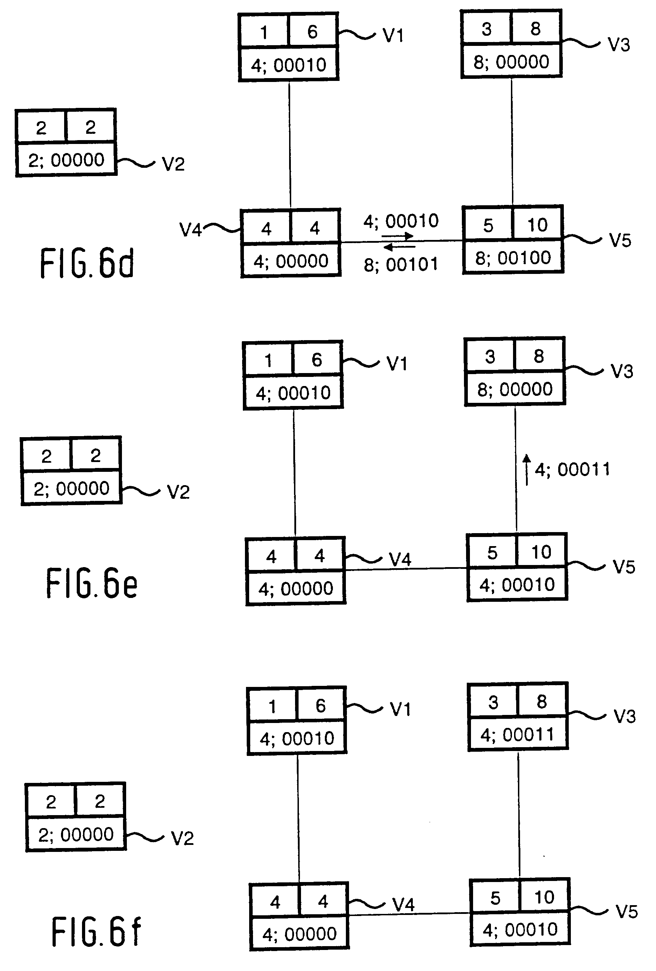

In Fig. 6d ist die Verbindung der beiden Teilnetze V1, V4 und V3, V5 durch ein zwischen den Vermittlungsstellen V4 und V5 angeschlossenes Leitungsbündel dargestellt. Bei Anschluß dieses Leitungsbündels sendet die Vermittlungsstelle V4 aufgrund einer von ihrem Schnittstellenmodul erzeugten internen Meldung BUP eine Synchronisationsmeldung (4;00010) an die neu hinzugekommene Vermittlungsstelle V5. Diese Synchronisationsmeldung entspricht dem Inhalt ihres Synchronisationsmeldespeichers, wobei das vierte Bit des Pfadvektors in der ausgesandten Synchronisationsmeldung gesetzt wird. Ihrerseits schickt auch die Vermittlungsstelle V5 Synchronisationsmeldungen (8;00101) an die Vermittlungsstelle V4.

Die in der Vermittlungsstelle V5 von der Vermittlungsstelle V4 ankommende Synchronisationsmeldung (4;00010) wird mit dem Inhalt des Synchronisationsmeldespeichers MEMO der Vermittlungsstelle V5 verglichen. Da die von der Vermittlungsstelle V4 ankommende Synchronisationsmeldung (4;00010) eine kleinere Synchronkennung SYNC-NR (= 4) aufweist als die im Synchronisationsmeldespeicher MEMO gespeicherte Synchronkennung SYNC(MEMO) (= 8), wird die von der Vermittlungsstelle V4 angekommene Synchronisationsmeldung (4;00010) im Synchronisationsmeldespeicher der Vermittlungsstelle V5 gespeichert.

Nach dem Abspeichern der Synchronisationsmeldung bezieht die Vermittlungsstelle V5 ihren Takt von der Vermittlungsstelle V4. Daraufhin schickt die Vermittlungsstelle V5 die in ihrem Synchronisationsmeldespeicher gespeicherte neue Synchronisationsmeldung an alle angeschlossenen Vermittlungsstellen, ausgenommen die Vermittlungsstelle V4, von der sie ja die Synchronisationsmeldung erhalten hat, aus, wobei sie durch Setzen der fünften Binärstelle kennzeichnet, daß die Sychronisationsmeldung (4;00011) von ihr weitergeleitet wurde. Da neben der Vermittlungsstelle V4 nur noch die Vermittlungsstelle V3 an der Vermittlungsstelle V5 angeschlossen ist, wird diese Meldung nur an die Vermittlungsstelle V3 gesandt (siehe Fig. 6e).

Die in Fig. 6d von der Vermittlungsstelle V5 ausgesandte Synchronisationsmeldung (8;00101) wird von der Vermittlungsstelle V4 ignoriert, da sie eine kleinere Synchronkennung (= 4) aufweist. Aufgrund der von der Vermittlungsstelle V5 empfangenen Synchronisationsmeldung (8;00101) sendet die Vermittlungsstelle V4 ihre Synchronisationsmeldung ein zweites Mal an die Vermittlungsstelle V5 (nicht dargestellt in den Figuren, weil keine weitere Auswirkung).

Die in der Vermittlungsstelle V3 von der Vermittlungsstelle V5 ankommende zweite Synchronisationsmeldung (siehe Fig. 6e) wird, da sie die kleinere Synchronkennung SYNC-NR(IN) (= 4) aufweist, als die in der Vermittlungsstelle V3 gespeicherte Synchronkennung SYNC-NR(MEMO) (= 8) ebenfalls umgespeichert und die Vermittlungsstelle V3 bezieht ihren Takt von der Vermittlungsstelle V5 und somit von der Vermittlungsstelle V4. Nachdem in allen Vermittlungsstellen des Teilnetzes V1, V3, V4, V5 alle ausgetauschten Synchronisationsmeldungen abgearbeitet sind, ist auf diese Weise die Vermittlungsstelle V4 als einziger Taktmaster in diesem Teilnetz vorhanden (Fig. 6f).

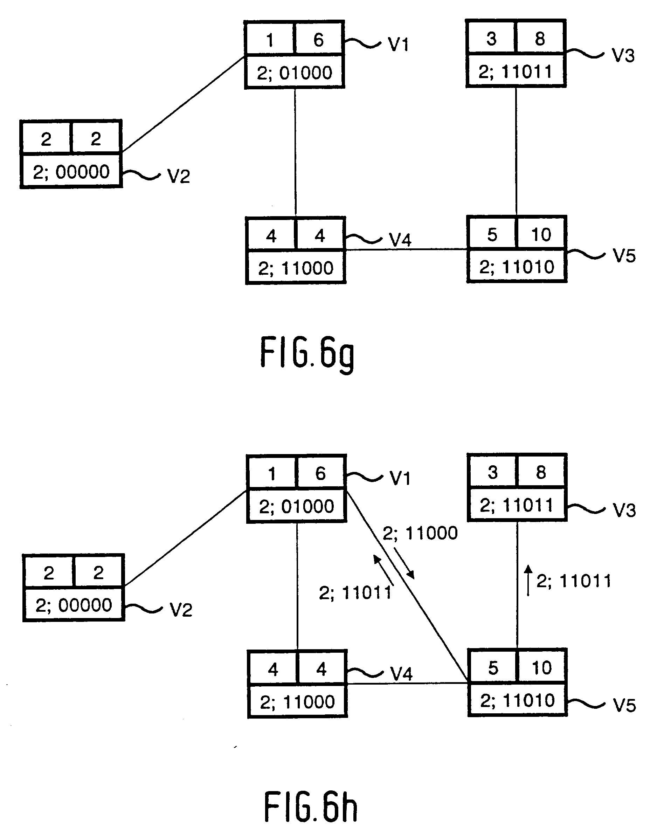

Beim weiteren in Fig. 6g dargestellten Ausbau des Vermittlungsnetzes wird die Vermittlungsstelle V2 an die Vermittlungsstelle V1 angeschlossen. Da die Vermittlungsstelle V2 in dem Gesamtnetz über die höchste Priorität verfügt, setzt sie sich in bereits geschilderter Weise als Taktmaster durch. Bei der in Fig. 6g gezeigten Netztopologie bezieht somit beispielsweise die Vermittlungsstelle V3 den Takt vom Taktmaster V2 über die Vermittlungsstellen V5, V4 und V1.

In einem in Fig. 6h gezeigten Stadium des Netzausbaus werden die Vermittlungsstellen V1 und V5 über ein Leitungsbündel miteinander verbunden worden. Hierdurch sendet die Vermittlungsstelle V1 in bereits geschilderter Weise ihre in ihrem Synchronisationsmeldespeicher gespeicherte Synchronisationsmeldung unter Kennzeichnung des ihr zugeordneten Bits des Pfadvektors (2;11000) an die an ihr neu angeschlossene Vermittlungsstelle V5. Die Vermittlungsstelle V5 sendet ihrerseits eine Synchronisationsmeldung (2;11011) an die Vermittlungsstelle V1.

Die Synchronisationsmeldung (2;11000) der Vermittlungsstelle V1 führt in der Vermittlungsstelle V5 zu einer Übernahme dieser Synchronisationsmeldung in den Synchronisationsmeldespeicher der Vermittlungsstelle V5, weil die Anzahl der gesetzten Bits des Pfadvektors in der von der Vermittlungsstelle V1 empfangenen Synchronisationsmeldung (2;11000) kleiner ist als die Anzahl der gesetzten Bits in dem gespeicherten Pfadvektor (11010) der Vermittlungsstelle V5. Auf diese Weise bezieht die Vermittlungsstelle V5 den Master-Takt der Vermittlungsstelle V2 nunmehr über die Vermittlungsstelle V1. Wegen der Umspeicherung der Synchronisationsmeldung schickt die Vermittlungsstelle V5 nun ihrerseits wieder Synchronisationsmeldungen (2;11001) an die an ihr angeschlossenen Vermittlungsstellen V3 und V4 (siehe Fig. 6i).

Die an der Vermittlungsstelle V4 ankommende Synchronisationsmeldung (2;11001) wird von der Vermittlungsstelle V4 ignoriert, da die Pfadlänge des empfangenen Pfadvektors (11001) größer ist, als die Länge des in der Vermittlungsstelle V4 gespeicherten Pfadvektors (11000). Einzig und allein die in der Vermittlungsstelle V3 ankommende Synchronisationsmeldung (2;11001) führt zu einer Umspeicherung dieser Synchronisationsmeldung in den Synchronisationsmeldespeicher der Vermittlung V3 und in diesem Fall weiterhin zu einem Bezug der Taktversorgung über die Vermittlungsstelle V5, wobei im Pfadvektor nun der kürzere Taktpfad enthalten ist (siehe Fig. 6k).

Bei dem geschilderten Ausführungsbeispiel ist durch die gewählte Abarbeitung der Meldungen und die Verwendung nur eines Meldungstyps für verschiedene Ereignisse die Reihenfolge, in der die Meldungen bei den einzelnen Vermittlungsstellen eintreffen und damit die Reihenfolge, in der sie abgearbeitet werden, unerheblich. Es setzt sich jeweils die bessere Meldung, d.h. die mit der kleinsten Synchronkennung und bei gleicher Synchronkennung die mit dem kürzesten Taktpfad durch.

Durch die beschriebene Verarbeitungsweise werden, wie gezeigt wurde, auch Synchronisationsmeldungen erzeugt und versandt, die eine höhere Synchronkennung aufweisen als die Synchronkennung, die in der betreffenden Vermittlungsstelle gespeichert ist. Oder es wird zweimal hintereinander die gleiche Synchronisationsmeldung an die gleiche Vermittlungsstelle gesandt. Solche Meldungen lösen in den geschilderten Fällen in der Vermittlungsstelle, von der sie empfangen werden, keine Reaktionen aus, sind also im Grunde "überflüssig". Durch zusätzliche Speicherung und Abfrage von Daten betreffend anderer an einer Vermittlungsstelle angeschlossener Vermittlungsstellen können solche "überflüssigen" Meldungen im Prinzip vermieden werden. Es hat sich jedoch als effizienter erwiesen, anstelle des Aufwands für die Verwaltung entsprechender Daten "überflüssige" Meldungen in Kauf zu nehmen. Außerdem ist sichergestellt, daß solche "überflüssigen" Meldungen nicht zur Aussendung weiterer "überflüssiger" Synchronisationsmeldungen führen. Auf diese Weise ist eine Bedingung zur Stabilität der Netzsynchronisation erfüllt, da überflüssig gesendete Synchronisationsmeldungen in der jeweils angesprochenen nächsten Vermittlungsstelle in jedem Fall zum Stillstand kommen.

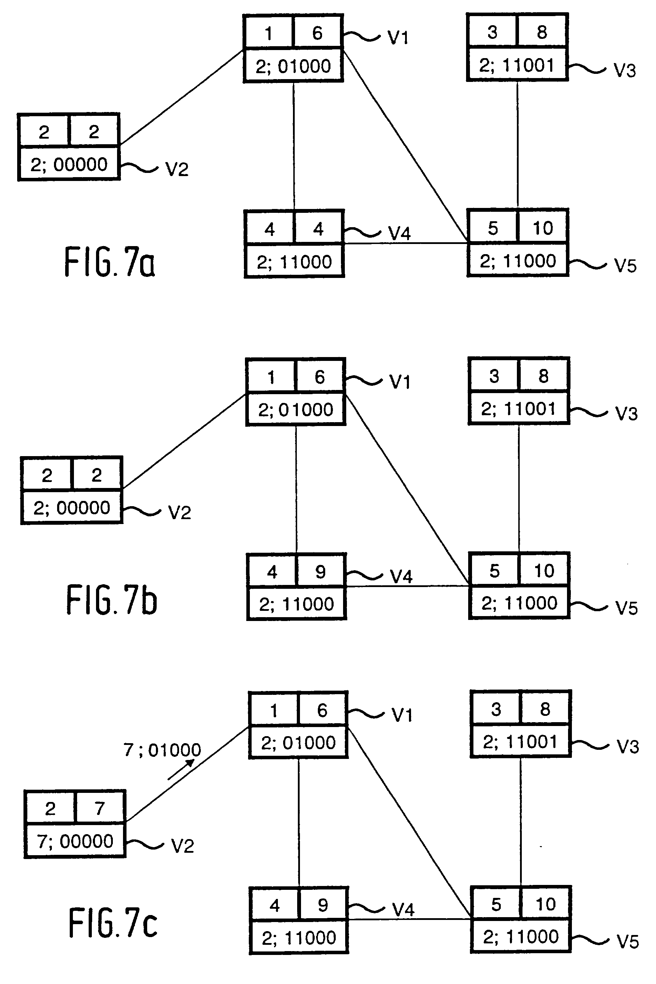

Im folgenden wird anhand der Figuren 7a bis 7f beschrieben, wie bei der Einstufung einer Vermittlungsstelle von einer höheren in eine niedrigere Prioritätsstufe die Takthierarchie im vermaschten Fernmeldenetz diesen Zustandsänderungen entsprechend angepaßt wird.

Fig. 7a zeigt als Ausgangssituation eine Netzstruktur und Takthierarchie, die mit dem in Fig. 6k dargestellten Fernmeldenetz übereinstimmt.

In Fig. 7b ist die Situation dargestellt, in der die Vermittlungsstelle V4 durch Ausfall ihrer Atomuhr in eine niedrigere Hierarchiestufe eingestuft wird. Hierdurch ändert sich die Synchronkennung der Vermittlungsstelle V4 von dem Zahlenwert 4 in den Zahlenwert 9. Da die Vermittlungsstelle V4 jedoch nicht Taktmaster war (wird in Abfrageblock 402 bei der Abarbeitung der Meldung ADOWN abgefragt), erzeugt sie keine Synchronisationsmeldungen. Auf diese Weise bleibt die ursprüngliche Takthierarchie und der ursprüngliche Taktbaum erhalten.

In Fig. 7c sind die Vorgänge im Netz dargestellt, die bei einer Einstufung des Taktmasters in eine niedrigere Takthierarchie ausgelöst werden. Durch Ausfall der Atomuhr erhöht sich die Synchronkennung der Vermittlungsstelle V2 von dem Zahlenwert 2 auf den Zahlenwert 7. Da die Vermittlungsstelle V2 Taktmaster war, sendet sie an alle angeschlossenen Vermittlungsstellen eine Synchronisationsmeldung mit ihrer neuen Synchronkennung und einem Taktpfad, dessen zweites Element gekennzeichnet ist (7;01000) aus. Da die Vermittlungsstelle V2 nur mit der Vermittlungsstelle V1 verbunden ist, wird diese Nachricht zunächst nur an die Vermittlungsstelle V1 gesandt.

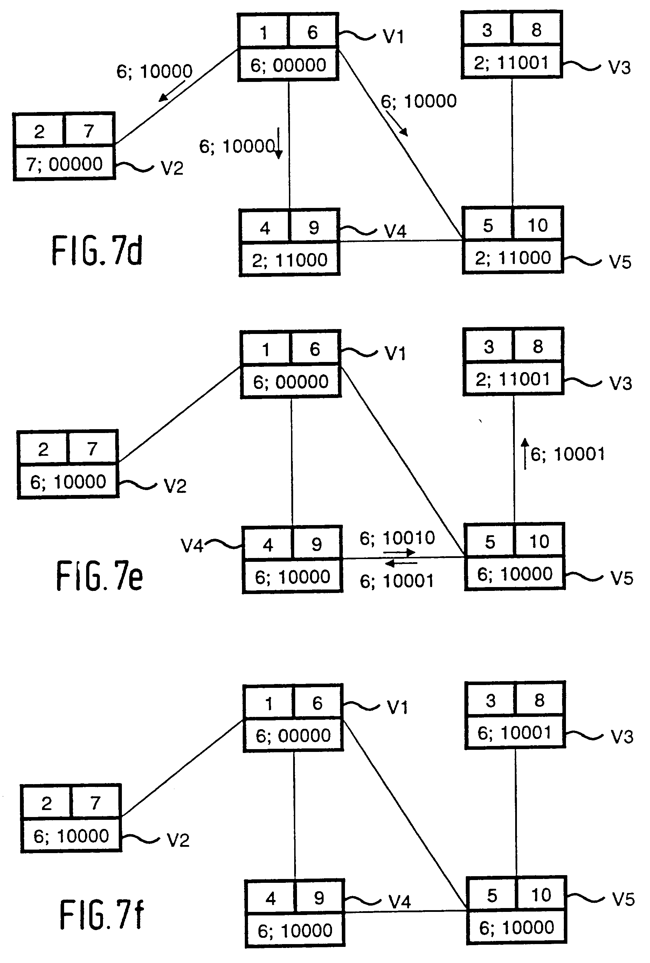

Durch den Empfang einer Synchronkennung, die größer ist als ihre eigene Synchronkennung, erkennt die Vermittlungsstelle V1, daß sie nun, da sie noch nicht selbst Taktmaster war (Abfrageblock 521) und sie bisher von oder über die Vermittlungsstelle, die ihr die Synchronmeldung zugeschickt hat, bisher ihren Takt bezogen hat (der in Abfrageblock 522 durchgeführte Vergleich des in der Vermittlungsstelle V1 gespeicherten Pfadvektors P(MEMO) und der von der Vermittlungsstelle V2 empfangene Pfadvektor P(IN) ergibt, daß beide Pfadvektoren nicht disjunkt sind) ergibt, daß nunmehr die Vermittlungsstelle V1 in die Position des Taktmasters aufgerückt ist (die eigene Synchronkennung SYNC-NR ist kleiner als die mit in der Synchronisationsmeldung übertragene Synchronkennung (Abfrageblock 524). Hieraufhin speichert sie in ihrem Synchronisationsmeldespeicher ihre eigene Synchronkennung und für den Pfadvektor einen Nullvektor. Anschließend wird diese gespeicherte Synchronisationsmeldung unter Kennzeichnung des ersten Pfadelementes an alle angeschlossenen Vermittlungsstellen V2, V4, V5, ausgesandt (siehe Fig. 7d).

Aufgrund dieser ausgesandten Synchronisationsmeldungen (6;10000) erkennen die Vermittlungsstellen V2, V4 und V5 die Vermittlungsstelle V1 als neuen Taktmaster an und speichern in ihrem Synchronisationsmeldespeicher die von der Vermittlungsstelle V1 ausgesandte Synchronisationsmeldung (siehe Fig. 7e).

Anschließend senden diese Vermittlungsstellen die empfangene Synchronisationsmeldung unter Setzen des entsprechenden Elements des Pfadvektors, der ihrer Identifikationsnummer ID entspricht, die Synchronisationsmeldung an alle anderen angeschlossenen Vermittlungsstellen weiter, von denen sie diese Meldung nicht erhalten haben.

Die von der Vermittlungsstelle V4 an die Vermittlungsstelle V5 gesandte Synchronisationsmeldung (6;10010) und die von der Vermittlungsstelle V5 an die Vermittlungsstelle V4 gesandte Synchronisationsmeldung (6;10001) wird von den empfangenden Vermittlungsstellen ignoriert, da sie bereits auf einem kürzeren Weg mit dem Taktmaster verbunden sind. Die von der Vermittlungsstelle V5 zur Vermittlungsstelle V3 gesandte Synchronistionsmeldung (6;10001) führt in der Vermittlungsstelle V3 dazu, daß die Vermittlungsstelle V3 die empfangene Synchronisationsmeldung (6;10001) speichert und ihren Takt von der Vermittlungsstelle V5 bezieht (siehe Fig. 7f). Damit ist die Netzsynchronisation, die durch den Verlust der Taktmastereigenschaft der Vermittlungsstelle V2 ausgelöst wurde, bereits wieder abgeschlossen. Als neuer Taktmaster hat sich im gesamten vermaschten Fernmeldenetz die Vermittlungsstelle V1 durchgesetzt.

Ausgehend von diesem stabilisierten Vorgang wird nun im folgenden der Ablauf der Netzsynchronistion bei Einstufung einer Vermittlungsstelle von einer niedrigeren Hierarchiestufe in eine höhere Hierarchiestufe beschrieben. Führt diese Einstufung in eine höhere Hierarchiestufe nicht dazu, daß diese Vermittlungsstelle in die Position des Taktmasters aufrückt (wird in Abfrageblock 302 festgestellt), so hat dies keine weiteren Meldungen und keine Änderung des Taktbaums und der Takthierarchie zur Folge. Diese Situation ist daher in einer eigenen Figur nicht dargestellt.

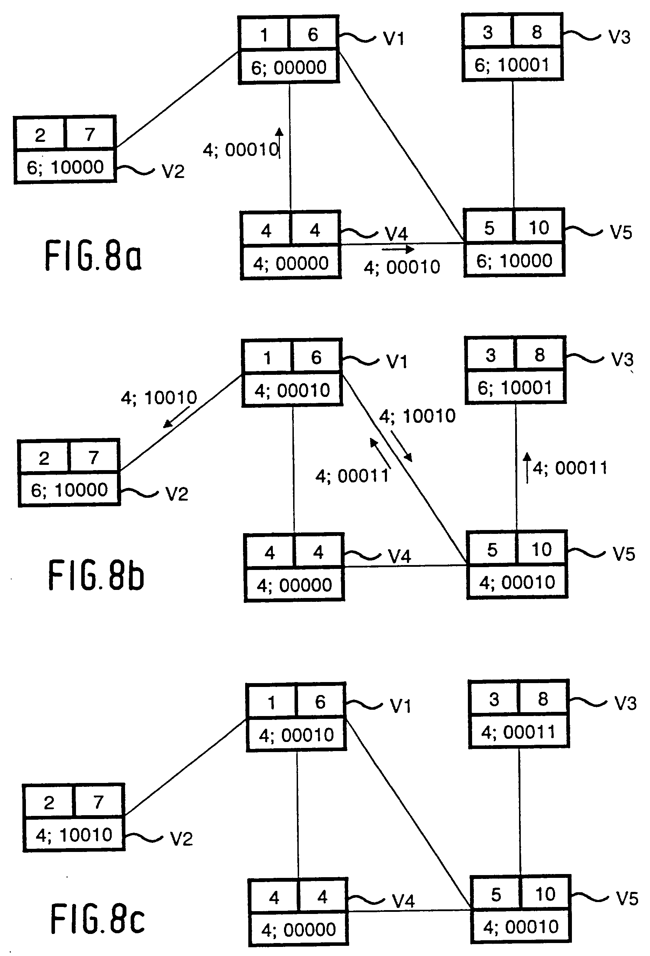

In der Fig. 8a hingegen ist das Aufsteigen der Vermittlungsstelle V4 von einer niedrigeren Hierarchiestufe in eine höhere Hierarchiestufe dargestellt, wodurch sich die Synchronkennung der Vermittlungsstelle V4 vom Zahlenwert 9 auf den Zahlenwert 4 vermindert. Da die neue Synchronkennung der Vermittlungsstelle V4 kleiner ist als die im Synchronisationsmeldespeicher gespeicherte Synchronkennung des Taktmasters (= 6), steigt sie dadurch zum neuen Taktmaster auf. Demzufolge verwendet die Vermittlungsstelle V4 nun ihren eigenen Taktgeber und speichert in ihrem Synchronisationsmeldespeicher ihre eigene Synchronkennung und als Pfadvektor einen Nullvektor. Unter Kennzeichnung des Elements des Pfadvektors, der ihrer Identifikationsnummer entspricht, sendet sie die gespeicherte Synchronisationsmeldung an die angeschlossenen Vermittlungsstellen V1 und V5.

Die Vermittlungsstellen V1 und V5 erkennen anhand der empfangenen Synchronisationsmeldungen (4;00010) die Vermittlungsstelle V4 als Taktmaster an, übernehmen von der Vermittlungsstelle V4 den Takt, speichern in ihrem Synchronisationsmeldespeicher die von der Vermittlungsstelle V4 empfangene Synchronisationsmeldung und reichen die empfangene Synchronisationsmeldung unter Kennzeichnung des die ausschickende Vermittlungsstelle zugeordneten Pfadelementes des Pfadvektors weiter an die anderen angeschlossenen Vermittlungsstellen.

Die von der Vermittlungsstelle V1 an die Vermittlungsstelle V2 geschickte Synchronisationsmeldung (4;10010) und die von der Vermittlungsstelle V5 an die Vermittlungsstelle V3 geschickte Synchronisationsmeldung (4;00011) führen ebenfalls zu einer Anerkennung der Vermittlungsstelle V4 als Taktmaster in diesen Vermittlungsstellen V2, V3. Die von der Vermittlungsstelle V5 an die Vermittlungsstelle V1 gesandte Synchronisationsmeldung (4;00011) und die von der Vermittlungsstelle V1 an die Vermittlungsstelle V5 gesandte Synchronisationsmeldung (4;10010) werden von den betreffenden Vermittlungsstellen ignoriert, weil der Pfadvektor der empfangenen Synchronistionsmeldungen länger ist als die der gespeicherten Synchronisationsmeldungen.

In den vorangegangenen Beschreibungen wurde der Ablauf der Netzsynchronisation gezeigt, für den Fall, daß die jeweiligen Synchronisationsmeldungen in der jeweiligen Reihenfolge ihres Absendens an den betreffenden Vermittlungsstellen ankamen. Es sei deshalb in einem Beispiel angenommen, daß die Verbindungsleitung zwischen der Vermittlungsstelle V4 und der Vermittlungsstelle V1 so stark überlastet sei, daß die von der Vermittlungsstelle V4 geschickte Synchronisationsmeldung (4;00010) erst nach der von der Vermittlungsstelle V5 an die Vermittlungsstelle V1 geschickten Synchronistionsmeldung (4;00011) an der Vermittlungsstelle V1 eintrifft. In diesem Fall wird die Vermittlungsstelle V1 zunächst ihren Takt über die Vermittlungsstelle V5 beziehen, da sie zu diesem Zeitpunkt nur von der Vermittlungsstelle V5 das Angebot hat, den Takt eines neuen Taktmasters von ihr zu beziehen. Nach Eintreffen der verzögerten Synchronisationsmeldung (4;00010) der Vermittlungsstelle V4 erkennt die Vermittlungsstelle V1 jedoch, daß die Länge des Taktpfades über die Vermittlungsstelle V4 kürzer ist und bezieht daraufhin ihren Takt von der Vermittlungsstelle V4. Es zeigt sich also, daß die zeitliche Reihenfolge, in der die Synchronisationsmeldungen an einer Vermittlungsstelle eintreffen, zwar vorübergehend einen anderen Taktbaum zur Folge haben können, im Endzustand aber einen minimalen Taktbaum, d.h. einen Taktbaum mit jeweils den kürzest notwendigen Taktpfaden, gewährleisten.

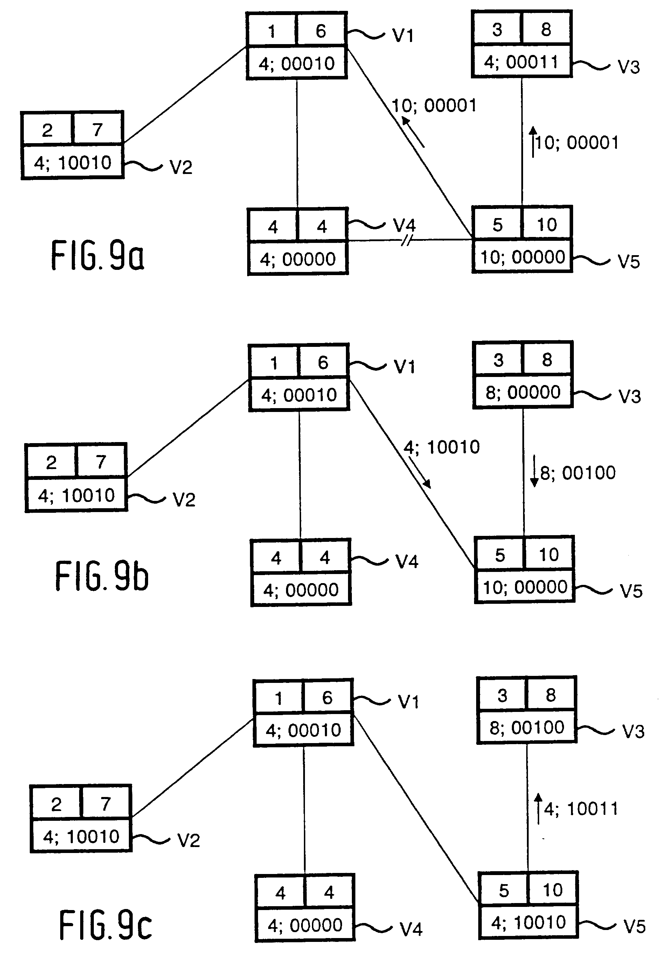

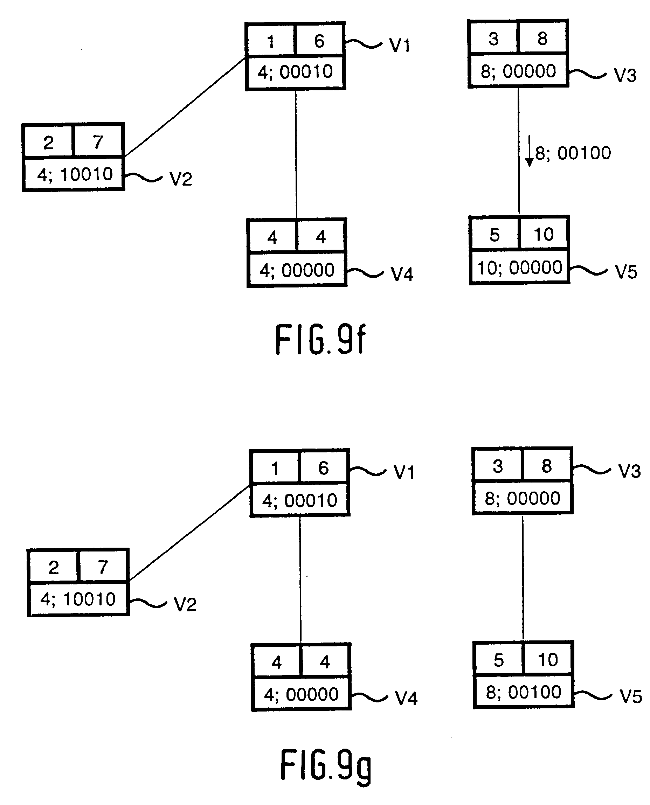

In den folgenden Figuren 9a bis 9h wird der Ablauf der Netzsynchronisation bei Ausfall von Verbindungsleitungen zwischen Vermittlungsstellen beschrieben. Fig. 9a zeigt ein Netz, das in seiner Struktur dem in Fig. 8c gezeigten Netz entspricht. Bei dem in Fig. 9a gezeigten Netz wird die Verbindungsleitung zwischen der Vermittlungsstelle V4 und der Vermittlungsstelle V5 unterbrochen. Hierdurch wird sowohl in der Vermittlungsstelle V4 als auch in der Vermittlungsstelle V5 eine interne Meldung BDOWN erzeugt. Da die Vermittlungsstelle V4 selbst Taktmaster ist, löst die Abarbeitung der internen Meldung BDOWN in ihr keine weiteren Reaktionen aus. Bei der Abarbeitung der internen Meldung BDOWN in der Vermittlungsstelle V5 hingegen, werden Synchronisationsmeldungen (10;00001) erzeugt, welche an die Vermittlungsstellen V1 und V3 gesandt werden. In der Vermittlungsstelle V1 wird bei der Überprüfung der von der Vermittlungsstelle V5 empfangenen Synchronisationsmeldung (10;00001) festgestellt, daß die empfangene Synchronisationskennung (= 10) größer ist als die im Synchronisationsmeldespeicher MEMO der Vermittlungsstelle V1 gespeicherte Synchronisationskennung (= 4) (Abfrageblöcke 502, 511). Da die Vermittlungsstelle V1 nicht selbst Taktmaster ist (Abfrageblock 521), der Pfadvektor (00001) der empfangenen Synchronisationsmeldung zu dem gespeicherten Pfadvektor (00010) jedoch disjunkt ist (Abfrageblock 522), wird bei der Befehlsbearbeitung über die Konnektoren 523, 515 zur Aussendung der eigenen Synchronisationsmeldung, und zwar nur an die Vermittlungsstelle V5 verzweigt (Blöcke 516, 517, 518). Auf diese Weise wird von der Vermittlungsstelle V1 an die Vermittlungsstelle V5 eine Synchronisationsmeldung (4;10010) gesandt (siehe Fig. 9b).

In gleicher Weise wird in der Vermittlungsstelle V3 mit der von der Vermittlungsstelle V5 empfangenen Synchronisationsmeldung (10;00001) verfahren und eine Synchronisationsmeldung (8;00100) an die Vermittlungsstelle V5 zurückgesandt.

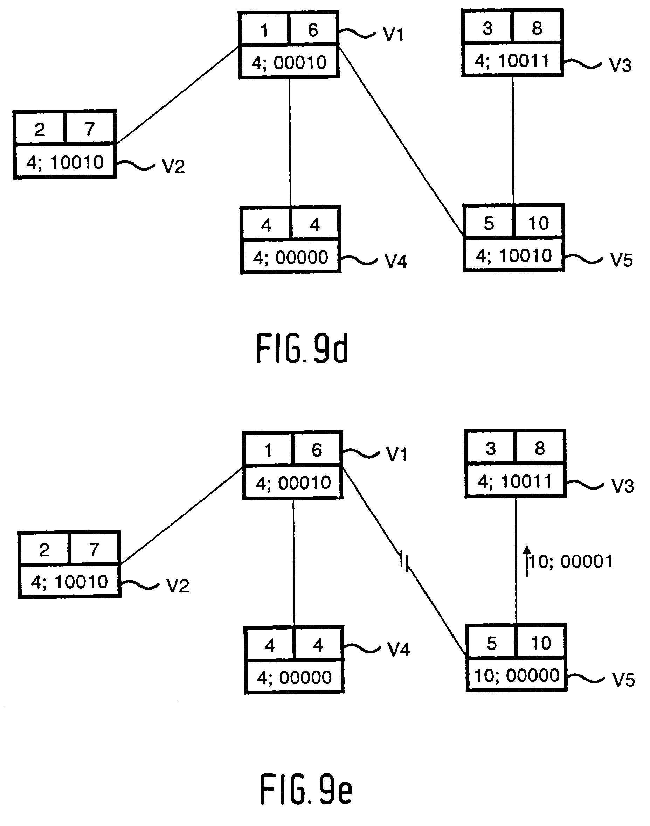

Unabhängig von der Reihenfolge des Eintreffens der Synchronisationsmeldungen der Vermittlungsstellen V1 und V3 setzt sich in der Vermittlungsstelle V5 die Synchronisationsmeldung (4;10010) der Vermittlungsstelle V1 durch. Dies führt dazu, daß die Vermittlungsstelle V5 nunmehr ihren Takt von der Vermittlungsstelle V4 über die Vermittlungsstelle V1 bezieht und eine Synchronisationsmeldung (4;10011) an die Vermittlungsstelle V3 sendet (siehe Fig. 9c). Aufgrund dieser Synchronisationsmeldung korrigiert die Vermittlungsstelle V3 entsprechend ihren Synchronisationsmeldespeicher (siehe Fig. 9d).

In Fig. 9e wird als nächstes die Verbindungsleitung zwischen der Vermittlungsstelle V1 und der Vermittlungsstelle V5 unterbrochen, wodurch das bisherige Gesamtnetz in zwei Teilnetze zerfällt. Daraufhin empfangen die Vermittlungsstellen V1 und V5 die Meldung BDOWN. Das das ausgefallene Bündel kein Taktbündel der Vermittlungsstelle V1 gewesen ist, reagiert V1 auf den Ausfall nicht (Abfrageblock 203). Somit wird sich an der Konfiguration des Teilnetzes aus den Vermittlungsstellen V1, V2 und V4 nichts ändern.

In dem anderen, aus den Vermittlungsstellen V3 und V5 gebildeten Teilnetz wird durch die Synchronisationsmeldung (10;00001) der Vermittlungsstelle V5 in der Vermittlungsstelle V3 wegen der kleineren Synchronkennung der Vermittlungsstelle V3 gegenüber der Synchronkennung der Vermittlungsstelle V5 die Aussendung einer Synchronisationsmeldung (8;00100) an die Vermittlungsstelle V5 ausgelöst (siehe Fig. 9f). Durch diese Sychronisationsmeldung (8;00100) setzt sich in dem verbliebenen Teilnetz V3, V5 die Vermittlungsstelle V3 als Taktmaster durch.

Auf diese Weise ist sichergestellt, daß durch Auftrennung eines Gesamtnetzes in Teilnetze in jedem Teilnetz sich die jeweilige Vermittlungsstelle mit der kleinsten Synchronkennung als Taktmaster durchsetzt.

## Patentansprüche

1. Hierachisches Synchronisationsverfahren für Vermittlungsstellen eines Fernmeldenetzes mit von Vermittlungsstelle zu Vermittlungsstelle unterschiedlich zugeordneter Synchronkennung,
bei dem anhand der Synchronkennung die als Taktmaster bezeichnete Vermittlungsstelle mit der höchsten Taktpriorität ermittelt wird,
bei dem von jeder Vermittlungsstelle eine Synchronisationsmeldung mit der gespeicherten Synchronkennung und weiteren Kennzeichen zur Identifikation der aussendenden Vermittlungsstelle aussendbar ist und
bei dem von jeder Vermittlungsstelle die Synchronkennung mit der höchsten Taktpriorität ermittelt und außer der Synchronkennung auch alle der Synchronkennung beigefügten Kennzeichen gespeichert werden,
dadurch gekennzeichnet,
daß die in einer Synchronisationsmeldung enthaltenen Kennzeichen zu einem Pfadvektor zusammengesetzt sind und
daß eine als Länge des Taktpfades bezeichnete Information über die Anzahl der zwischen dem Taktmaster und einer Vermittlungsstelle liegenden anderen Vermittlungsstellen durch Addition aller Elemente des Pfadvektors ermittelbar ist.

2. Hierachisches Synchronisationsverfahren nach Anspruch 1,
dadurch gekennzeichnet,
daß jeder Vermittlungsstelle verschiedene Hierachiestufen zuordenbar sind und daß bei Übergang von einer höheren in eine niedrigere Hierachiestufe die Synchronkennung der betreffenden Vermittlung um eine Zahl vermindert wird, die mindestens einer größten in diesem Fernmeldenetz für eine Vermittlungsstelle vergebenen Kennummer entspricht.

3. Hierachisches Synchronisationsverfahren nach Anspruch 1,
dadurch gekennzeichnet,
daß jeder Vermittlungsstelle verschiedene Hierachiestufen zuordenbar sind und daß bei Übergang von einer höheren in eine niedrigere Hierachiestufe die Synchronkennung der betreffenden Vermittlung um eine Zahl vermindert wird, die mindestens der Anzahl der Elemente des Pfadvektors entspricht.

4. Hierachisches Synchronisationsverfahren nach einem der Ansprüche 1 bis 3,
dadurch gekennzeichnet,
daß bei Anschluß einer neu hinzukommenden Vermittlungsstelle an eine bestehende Vermittlungsstelle die bestehende Vermittlungsstelle eine Synchronisationsmeldung an die neu hinzukommende Vermittlungsstelle sendet.

5. Hierachisches Synchronisationsverfahren nach einem der Ansprüche 1 bis 3,
dadurch gekennzeichnet,
daß eine Vermittlungsstelle, die nicht selber Taktmaster ist, bei Ausfall einer Vermittlungsstelle, deren Kennzeichen in der gespeicherten Synchronisationsmeldung enthalten ist, eine Synchronisationsmeldung an alle anderen angeschlossenen Vermittlungsstellen sendet.

6. Hierachisches Synchronisationsverfahren nach Anspruch 2 oder 3,
dadurch gekennzeichnet,
daß bei Aufstieg einer Vermittlungsstelle in eine höhere Hierarchiestufe diese Vermittlungsstelle eine Synchronisationsmeldung an alle Vermittlungsstellen schickt, wenn die gespeicherte Synchronkennung (SYNC-NR(MEMO)) größer ist als die Synchronkennung (SYNC-NR) der Vermittlungsstelle.

7. Hierachisches Synchronisationsverfahren nach Anspruch 2 oder 3,
dadurch gekennzeichnet,
daß bei einer Herabstufung einer Vermittlungssstelle von einer höheren in eine niedrigere Hierarchiestufe die Vermittlungsstelle eine Synchronisationsmeldung an alle angeschlossenen Vermittlungsstellen sendet, wenn sie bisher selbst Taktmaster war.

8. Hierachisches Synchronisationsverfahren nach einem der Ansprüche 1 bis 3,
dadurch gekennzeichnet,
daß bei Empfang einer Synchronkennung (SYNC-NR(IN)), die kleiner ist als die gespeicherte Synchronkennung (SYNC-NR(MEMO)) an alle anderen angeschlossenen Vermittlungsstellen, außer an die Vermittlungsstelle, von der die betreffende Synchronisationsmeldung erhalten wurde, eine Synchronisationsmeldung ausgesendet wird.

9. Hierachisches Synchronisationsverfahren nach einem der Ansprüche 1 bis 3,
dadurch gekennzeichnet,
daß bei Übereinstimmung der empfangenen Synchronkennung mit der gespeicherten Synchronkennung, wenn der Taktpfad der empfangenen Synchronisationsmeldung kürzer ist als der Taktpfad der gespeicherten Synchronisationsmeldung an alle anderen angeschiossenen Vermittlungsstellen, außer an die Vermittlungsstelle, von der die betreffende Synchronisationsmeldung erhalten wurde, eine Synchronisationsmeldung ausgesandt wird.

10. Hierachisches Synchronisationsverfahren nach einem der Ansprüche 1 bis 3,
dadurch gekennzeichnet,
daß bei Empfang einer Synchronkennung, die mit der gespeicherten Synchronkennung überstimmt, eine Synchronisationsmeldung an die Vermittlungsstelle ausgesandt wird, von der diese Synchronkennung erhalten wurde, wenn die Länge des Taktpfades der empfangenen Synchronisationsmeldung größer ist als die Länge des Taktpfades der gespeicherten Synchronisationsmeldung.

11. Hierachisches Synchronisationsverfahren nach einem der Ansprüche 1 bis 3,
dadurch gekennzeichnet,
daß eine Vermittlungsstelle, die selbst Taktmaster ist und eine Synchronkennung empfängt, die größer ist als ihre gespeicherte Synchronkennung an die Vermittlungsstelle, von der sie diese Synchronkennung erhalten hat, eine Synchronisationsmeldung aussendet.

12. Hierachisches Synchronisationsverfahren nach einem der Ansprüche 1 bis 3,
dadurch gekennzeichnet,
daß eine Vermittlungsstelle, die nicht selbst Taktmaster ist, bei Empfang einer Synchronkennung, die größer ist als ihre gespeicherte Synchronkennung die Menge der empfangenen Kennzeichen mit der Menge der gespeicherten Kennzeichen auf Disjunktheit überprüft.

13. Hierachisches Synchronisationsverfahren nach Anspruch 12,
dadurch gekennzeichnet,
daß bei disjunkten Kennzeichenmengen die Vermittlungssteile eine Synchronisationsmeldung an die Vermittlungsstelle aussendet, von der sie diese Synchronkennung erhalten hat.

14. Hierachisches Synchronisationsverfahren nach Anspruch 12,
dadurch gekennzeichnet,
daß bei nichtdisjunkten Kennzeichenmengen, wenn die empfangene Synchronkennung kleiner ist als die der Vermittlungsstelle eigene Synchronkennung (SYNC-NR) eine Synchronisationsmeldung an alle anderen angeschlossenen Vermittlungsstellen, außer an die Vermittlungsstelle, von der die betreffende Synchronkennung erhalten wurde, ausgesandt wird.

15. Hierachisches Synchronisationsverfahren nach Anspruch 12,
dadurch gekennzeichnet,
daß bei nichtdisjunkten Kennzeichenmengen, wenn die empfangene Synchronkennung (SYNC-NR(IN)) nicht kleiner ist als die der Vermittlungsstelle eigene Synchronkennung (SYNC-NR) die Vermittlungsstelle alle gespeicherten Kennzeichen löscht und zur Aussendung einer Synchronisationsmeldung an alle angeschlossenen Vermittlungsstellen ihre eigene Synchronkennung verwendet.

## Claims

1. Hierarchical synchronization method for nodes of a telecommunication network with different synchronization (sync) numbers for each individual node, in which the node designated as the clock master on the basis of the sync number has the highest clock priority, in which from each node a synchronization (sync) message can be transmitted which includes the stored sync number and further code signals to identify the transmitting node, and in which from each node the sync number having the highest clock priority is determined and not only the sync number, but also all the code signals appended to the sync number are stored, characterized in that the code signals contained in a sync message are combined to a path vector, and in that an information signal denoting the length of the clock path and giving information about the number of other nodes located between the clock master and a particular node can be determined by adding all the elements of the path vector together.

2. Hierarchical synchronization method as claimed in Claim 1, characterized in that various hierarchical levels can be assigned to each node and in that in the case of a change from a higher to a lower hierarchical level the sync number of a particular node is reduced by a number corresponding at least to the largest identification code issued for a node in this communication network.

3. Hierarchical synchronization method as claimed in Claim 1, characterized in that various hierarchical levels can be assigned to each node and in that in the case of a change from a higher to a lower hierarchical level the sync number of a particular node is reduced by a number corresponding at least to the number of elements of the path vector.

4. Hierarchical synchronization method as claimed in one of the Claims 1 to 3, characterized in that when a newly added node is connected to an existing node, the existing node sends a sync message to the newly connected node.

5. Hierarchical synchronization method as claimed in one of the Claims 1 to 3, characterized in that a node that is not itself a clock master sends a sync message to all the other connected nodes in the case of a breakdown of a node whose number is contained in the stored sync message.

6. Hierarchical synchronization method as claimed in Claim 2 or 3, characterized in that when a node is upgraded to a higher hierarchical level, this node sends a sync message to all the nodes when the stored sync number (SYNC-NR(MEMO)) is larger than the sync number (SYNC-NR) of the node.

7. Hierarchical synchronization method as claimed in Claim 2 or 3, characterized in that in the case of a degrading of a node from a higher to a lower hierarchical level the node sends a sync message to all the connected nodes when it used to be clock master itself.

8. Hierarchical synchronization method as claimed in one of the Claims 1 to 3, characterized in that if a sync number (SYNC-NR(IN)) is received smaller than the stored sync number (SYNC-NR(MEMO)), a sync message is sent to all the other connected nodes but the node from which that particular sync message was received.

9. Hierarchical synchronization method as claimed in one of the Claims 1 to 3, characterized in that if the received sync number corresponds to the stored sync number, if the clock path of the received sync message is shorter than the clock path of the stored sync message, a sync message is sent to all the other connected nodes but the node from which that particular sync message was received.

10. Hierarchical synchronization method as claimed in one of the Claims 1 to 3, characterized in that if a sync number corresponding to the stored sync number is received, a sync message sent to the node from which this sync number was received, if the length of the clock path of the received sync message is larger than the length of the clock path of the stored sync message.

11. Hierarchical synchronization method as claimed in one of the Claims 1 to 3, characterized in that a node which itself is a clock master and receives a sync number that is larger than its stored sync number, sends a sync message to the node from which it has received this sync number.

12. Hierarchical synchronization method as claimed in one of the Claims 1 to 3, characterized in that a node which itself is not a clock master checks the size of the received identification number with the size of the stored sync number for disjunctness if a sync number that is larger than its stored sync number is received.

13. Hierarchical synchronization method as claimed in Claim 12, characterized in that in the case of disjunct sync number sizes the node sends a sync message to the node from which it has received this sync number.

14. Hierarchical synchronization method as claimed in Claim 12, characterized in that in the case of non-disjunct sync number sizes a sync message is sent to all the nodes but the node from which the sync number was received, if the received sync number is smaller than the node's own sync number (SYNC-NR).

15. Hierarchical synchronization method as claimed in Claim 12, characterized in that in the case of non-disjunct sync number sizes, if the received sync number (SYNC-NR(IN)) is not smaller than the node's own sync number (SYNC-NR), the node erases all stored identification numbers and uses its own sync number for transmitting a sync message to all the connected nodes.

## Revendications

1. Procédé hiérarchique de synchronisation pour les points de commutation d'un réseau de télécommunications avec un indicatif synchrone affecté différemment d'un point de commutation à l'autre, dans lequel, sur la base de l'indicatif synchrone, on détermine le point de commutation, qualifié d'horloge mère, de priorité de cadence la plus élevée, dans lequel chaque point de commutation envoie un message de synchronisation avec l'indicatif synchrone mémorisé et d'autres symboles pour identifier le point de commutation émetteur, et dans lequel chaque point de commutation détermine l'indicatif synchrone de la priorité de cadence la plus élevée et, en dehors de l'indicatif synchrone, tous les symboles ajoutés à l'indicatif synchrone sont également mémorisés, caractérisé en ce que les symboles contenus dans un message de synchronisation sont rassemblés en un vecteur de bus et en ce qu'une information, qualifiée de longueur du bus d'horloge, sur le nombre des autres points de commutation se trouvant entre l'horloge mère et un point de commutation, peut être déterminée par addition de tous les éléments du vecteur de bus.

2. Procédé hiérarchique de synchronisation selon la revendication 1, caractérisé en ce qu'à chaque point de commutation peuvent être affectés divers étages hiérarchiques et en ce que, par passage d'un étage hiérarchique supérieur à un étage hiérarchique inférieur, l'indicatif synchrone du point de commutation concerné est réduit d'un nombre qui correspond au moins à un très grand nombre caractéristique attribué, dans ce réseau de télécommunications, à un point de commutation.

3. Procédé hiérarchique de synchronisation selon la revendication 1, caractérisé en ce qu'à chaque point de commutation peuvent être affectés divers étages hiérarchiques et en ce que, au passage d'un étage hiérarchique supérieur à un étage hiérarchique inférieur, l'indicatif synchrone du point de commutation concerné est réduit d'un nombre qui correspond au moins au nombre d'éléments du vecteur de bus.

4. Procédé hiérarchique de synchronisation selon l'une quelconque des revendications 1 à 3, caractérisé en ce que, lors du raccordement d'un point de commutation nouvellement ajouté à un point de commutation existant, le point de commutation existant envoie un message de synchronisation au point de commutation nouvellement ajouté.

5. Procédé hiérarchique de synchronisation selon l'une quelconque des revendications 1 à 3, caractérisé en ce qu'un point de commutation, qui n'est pas lui-même l'horloge mère, lors d'une défaillance d'un point de commutation, dont le symbole est contenu dans le message de synchronisation mémorisé, envoie un message de synchronisation à tous les autres points de commutation raccordés.

6. Procédé hiérarchique de synchronisation selon la revendication 2 ou 3, caractérisé en ce que, lors de la montée du point de commutation à un étage hiérarchique supérieur, ce point de commutation envoie un message de synchronisation à tous les points de commutation lorsque l'indicatif synchrone mémorisé [SYNC-NR(MEMO)] est supérieur à l'indicatif synchrone (SYNC-NR) du point de commutation.

7. Procédé hiérarchique de synchronisation selon la revendication 2 ou 3, caractérisé en ce que, lors d'une passage d'un point de commutation d'un étage hiérarchique supérieur à un étage hiérarchique inférieur, le point de commutation envoie un message de synchronisation à tous les points de commutation raccordés s'il était lui-même jusqu'à présent une horloge mère.

8. Procédé hiérarchique de synchronisation selon l'une quelconque des revendications 1 à 3, caractérisé en ce que, à la réception d'un indicatif synchrone [SYNC-NR(IN)], qui est plus petit que l'indicatif synchrone mémorisé [SYNC-NR(MEMO)], un message de synchronisation est envoyé à tous les autres points de commutation raccordés, en dehors du point de commutation par lequel le message de synchronisation concerné a été reçu.

9. Procédé hiérarchique de synchronisation selon l'une quelconque des revendications 1 à 3, caractérisé en ce que, lorsque l'indicatif synchrone reçu coïncide avec l'indicatif synchrone mémorisé, si le bus d'horloge du message de synchronisation reçu est plus court que le bus d'horloge du message de synchronisation mémorisé, un message de synchronisation est envoyé à tous les autres points de commutation raccordés, en dehors du point de commutation par lequel le message de synchronisation concerné a été reçu.

10. Procédé hiérarchique de synchronisation selon l'une quelconque des revendications 1 à 3, caractérisé en ce que, à la réception d'un indicatif synchrone, qui coïncide avec l'indicatif synchrone mémorisé, un message de synchronisation est envoyé au point de commutation par lequel cet indicatif synchrone a été reçu, si la longueur du bus d'horloge du message de synchronisation reçu est plus grande que la longueur du bus d'horloge du message de synchronisation mémorisé.

11. Procédé hiérarchique de synchronisation selon l'une quelconque des revendications 1 à 3, caractérisé en ce qu'un point de commutation, qui est lui-même une horloge mère et reçoit un indicatif synchrone, qui est plus grand que son indicatif synchrone mémorisé, envoie un message de synchronisation au point de commutation par lequel il reçoit cet indicatif synchrone.

12. Procédé hiérarchique de synchronisation selon l'une quelconque des revendications 1 à 3, caractérisé en ce qu'un point de commutation, qui n'est pas lui-même l'horloge mère, à la réception d'un indicatif synchrone, qui est plus grand que son indicatif synchrone mémorisé, contrôle la disjonction entre la quantité de symboles reçus et la quantité de symboles mémorisés.

13. Procédé hiérarchique de synchronisation selon la revendication 12, caractérisé en ce que, dans le cas de quantités de symboles disjonctées, le point de commutation envoie un message de synchronisation au point de commutation par lequel il a reçu cet indicatif synchrone.

14. Procédé hiérarchique de synchronisation selon la revendication 12, caractérisé en ce que, dans le cas de quantités de symboles non disjonctées, lorsque l'indicatif synchrone reçu est plus petit que l'indicatif synchrone propre au point de commutation (SYNC-NR), un message de synchronisation est envoyé à tous les autres points de commutation raccordés, en dehors du point de commutation par lequel l'indicatif synchrone concerné a été reçu.

15. Procédé hiérarchique de synchronisation selon la revendication 12, caractérisé en ce que, dans le cas de quantités de symboles non disjonctées, lorsque l'indicatif synchrone reçu [SYNC-NR(IN)] n'est pas plus petit que son indicatif synchrone (SYNC-NR) propre au point de commutation, le point de commutation efface tous les symboles mémorisés et utilise son propre indicatif synchrone pour envoyer un message de synchronisation à tous les points de commutation raccordés.
